# EUROPÄISCHE PATENTSCHRIFT

(11) **EP 1 563 312 B1**
(45) Veröffentlichungstag und Bekanntmachung des Hinweises auf die Patenterteilung: **07.05.2008**
(21) Anmeldenummer: 03797486.2
(22) Anmeldetag: 23.09.2003
(51) Int. Cl.: G01P 3/68, G01P 3/80, G01P 3/36, G05D 1/08, A63H 30/04, A63H 27/00

(54) **MESS- UND STABILISIERUNGSYSTEM F R MASCHINELL STEUERBARE VEH IKEL**
MEASURING AND STABILISING SYSTEM FOR MACHINE-CONTROLLABLE VEHICLES
SYSTEME DE MESURE ET DE STABILISATION POUR DES VEHICULES COMMANDES PAR MACHINE

(30) Priorität: 23.09.2002 DE 10244313; 30.11.2002 DE 10256202; 14.12.2002 DE 10258545
(43) Veröffentlichungstag der Anmeldung: 17.08.2005
(73) Patentinhaber: Captron Electronic GmbH, 81243 München (DE); Reich, Stefan, 82418 Murnau (DE)
(72) Erfinder: Stefan Reich, 82418 Murnau (DE)
(86) Internationale Anmeldenummer: PCT/IB2003/004126
(87) Internationale Veröffentlichungsnummer: WO 2004/027434

(56) Entgegenhaltungen:
- DE-A- 3 229 343
- DE-A- 4 444 223
- FR-A- 2 431 705

## Beschreibung

Die Erfindung betrifft eine Vorrichtung und Verfahren zur Messung von Bewegungsgrößen wie Geschwindigkeit und/oder Position eines maschinell steuerbaren Vehikels, wobei der Begriff "Vehikel" auch Flugkörper beinhaltet, in mindestens einem seiner sechs Freiheitsgrade, unter Verwendung optischer Sensorik; ferner insbesondere eine Verwendung als Stabilisierungssystem zur Steuerung unbemannter oder bemannter Flugkörper. Zweck einer solchen Stabilisierung ist es, die Steuerung wesentlich zu vereinfachen oder auch vollständig zu übernehmen.

Besonders für ferngelenkte Hubschrauber ist eine solche Stabilisierung wichtig, da deren Steuerung schwierig und nur geübten Piloten möglich ist. Beim Hubschrauber kann die Stabilisierung insbesondere eine oder beide horizontale Komponenten der Flugbewegung beinhalten. Ein weiteres mögliches Anwendungsgebiet der Erfindung ist die Vereinfachung der Steuerung bemannter Flugzeuge insbesondere in Bodennähe und beim Landevorgang. In weiteren Ausgestaltungen ergeben sich weitere Anwendungen, wie Abstandsmessung. Zielverfolgung, Abtastung eines Höhenreliefs des Bodens, Abstimmung der Flugbewegung mehrerer Flugkörper aufeinander.

Übliche ferngelenkte Hubschrauber, wie sie als Hobby und zur Flugfotografie verwendet werden, enthalten zu Stabilisierung lediglich einen piezoelektrischen Drehgeber, zur Stabilisierung um die Hochachse über den Heckrotor, nicht jedoch die anderen Achsen.

Sowohl die DE-A-69502379 als auch die JP-A-10328427 beschreiben eine Regelung für Hubschrauber, wobei Instrumente für Gravitationsbeschleunigung und Drehgeschwindigkeit vorhanden sind, womit ein künstlicher Horizont dargestellt und die Schrägneigung der Rotorblätter geregelt wird.

Bei der US-A-5,738,300 wird zusätzlich die Reisegeschwindigkeit gegenüber Luft (Air Speed) gemessen und geregelt. Eine Regelung über Grund, und besonders ein stationärer Schwebeflug, sind in allen genannten Fällen nicht möglich.

Die RU-A-9300250 und die DE-A-69507168 beschreiben Stabilisierungssysteme, bei denen durch mehrere Lichtsensoren die Richtung des Lichteinfalls gemessenen und ausgewertet wird, um eine Information über die Schräglage zu erhalten und diese zu regeln, wobei auch Annäherung an Objekte erkannt werden können. Beide genannten Systeme können nur bei gleichmäßiger Beleuchtung und einem sehr flachen Horizont korrekt funktionieren.

Die EP-A- 0 780 807 beschreibt einen Autopiloten, der herkömmliche Instrumente wie Kreisel verwendet und Fluglage sowie horizontale Geschwindigkeiten auf relative Weise stabilisiert. Eine absolute Messung oder Regelung der absoluten Boden-bezogenen Position ist jedoch nicht möglich.

Um etwa die Flugbahn eines Helikopters zu regeln, etwa um auf der Stelle zu schweben, muss durch geeignete Ansteuerung der Rotorblätter erstens die Neigung (Roll- und Nick-Winkel) und zweitens die dadurch resultierende Geschwindigkeit geregelt werden. Hierzu müssen sowohl Neigung als auch Horizontal-Geschwindigkeit bekannt sein, und zwar vorzugsweise über Grund. Zum Alleinflug genügt es nicht, wenn einer Schräglage stets entgegengewirkt wird, denn selbst dann kann der Hubschrauber eine vorhandene Geschwindigkeit nicht selbständig abbauen, sondern muss durch eine dosierte Gegen-Neigung zum Stillstand gebracht werden.

In diesem Zusammenhang besteht die Aufgabe der Erfindung darin, horizontale Bewegungen Ober Grund zu messen, um sie stabilisieren zu können.

Die DE 69426738 T2 beschreibt ein Navigationssystem mit einem an einem kardanisch aufgehängten Tisch befestigten Bildsensor, dessen Bilddaten auf Verschiebung ausgewertet werden und zur Positionsbestimmung aufmtegriert werden.

Die DE 69310695 T2 beschreibt eine Auswertung eines von der Flugposition erhaltenen Bildes von einer oder mehreren Kameras. Dabei werden einzelne charakteristische Bildstellen fortlaufende auf optische Wanderung untersucht, daraus ein Zentrum dieser Bewegungen (Fluchtpunkt) erkannt, und die einzelnen Verschiebungsgeschwindigkeiten ausgewertet, gewichtet in Bezug zu ihrem Fluchtpunkt-Abstand, woraus Abstände zu den betreffenden Bodenpunkten berechnet werden, zwecks Navigation.

Die DE 69012278 T2 vergleicht aktuell aufgenommene Bilder mit einer Karte aus früher abgespeicherten Bildern zwecks Wiedererkennung, ebenfalls zur Navigation.

Aus der FR-A-2 431 705 ist ein Geschwindigkeits-Meßsystem für Flugzeuge unter Verwendung zweier Objektive bekannt, die zwei Bildabschnitte des Bodens nämlich einem in Flugrichtung gesehen vorderen und einen hinteren, auf zwei Photodetektor-Vorrichtungen abbilden, womit je ein Videosignal erzeugt wird. Beide Videosignal werden miteinander synchronisiert und mithilfe einer Verzögerungs-Messschaltung und Autokorrelations-Verfahren auf Zeit-Verschiebung untereinander verglichen und hieraus auf die Geschwindigkeit geschlossen.

Die ersten drei der vier letztgenannten Verfahren erfordern eine aufwendige Bildverarbeitung und mindestens eine Kamera. Die Mess-Geschwindigkeit ist durch die von der Kamera vorgegebene Bildfolgefrequenz begrenzt. Bei einer Videokamera ist dies für eine rasche Lageregelung nachteilhaft, besonders bei kleinen Hubschrauber. Für leichte ferngesteuerte Flugkörper sind solche Verfahren aus Gründen des Gewichts, der Kosten und der begrenzten Abtast-Rate nachteilig.

Aus der DE 32 29 343 A1 ist ein Meßsystem bekannt, bei dem mit einer Gitterstruktur Bildsignale erfasst und die Bildsignale zum Erfassen von Relatirbewegungen zu einer Bezugsfläche ausgewertet werden. Aus der DE 44 44 223 A1 ist eine Messanordnung bekannt, bei der Sensorelemente und Auswerteschaltung gemeinsam auf einem Chip angeordnet sind.

Positions-Messung mit Satellitennavigation (GPS) hat den Nachteil, dass kleine Bewegungen, wie sie in Bodennähe wichtig sind, nicht genau genug erfasst werden. Außerdem ist der Einsatz in Spieizeug-Modellen sowohl aus Gewichts- als auch aus Kosten-Gründen nicht sinnvoll.

Aufgabe der Erfindung ist es, ein Meßsystem der genannten Art so zu verbessern, dass es ohne die genannten Nachteile arbeitet, eine hohe Messgeschwindigkeit hat, Bewegungen präzise erkennt und sich daher auch als Mess-Instrument für eine Stabilisierung eignet und insbesondere zur Lieferung von Ist-Werten im Zusammenhang mit einer Stabilisierung für vom Boden aus ferngelenkte Flugkörper geeignet ist. Diese Aufgabe wird durch die in den unabhängigen Patentansprüchen angegebene Erfindung gelöst.

Als Verschiebungssensor lässt sich ein optischer Sensor mit einer im Vergleich zu Bildaufnahmevorrichtungen geringen Anzahl von photoempfindlichen Elementen und mit einer auf dem gleichen Chip integrieten Auswerte-Eefektronik verwenden, wie sie gelegentlich auch als Bewegungssensor bekannt sind und gewöhnlicherweise in optischen Mäusen eingesetzt werden. Letztere werden nachfolgend Optomaus-Sensoren genannt.

Ein solcher Verschiebungssensor beinhaltet auf einem Substrat eine Abtastfläche, die aus einer Vielzahl lichtempfindlicher Teilflächen (Pixel) besteht, deren Signale regelmäßig, ausgelesen werden, wobei die Auslese-Rate wesentlich höher sein kann als die bei Videokameras gegebene Bildwechselfrequenz, und enthält ferner auf dem gleichen Substrat eine Auswert-Einheit, in der die Pixel-Signale elektronisch auf Verschiebung ausgewertet werden. Die Verschiebung kann üblicherweise in zwei orthogonalen Koordinaten inkremental ermittelt und in separaten Messwerten (delta x, delta y) ausgegeben werden. Die Verschiebung kann in feine Stufen aufgelöst sein, die beispielsweise dem Pixelabstand entsprechen können. Die Erkennung des Sensors kann sowohl Richtung als auch Ausmaß der optischen Verschiebung (Translation) beinhalten.

Um auch bei zufällig und unregelmäßig verteilten Bildstrukturen der Maus-Unterlage, wie sie etwa durch die mikroskopischen Fasern eines Papiers gegeben sind, eine Verschiebung zu erkennen, enthalten übliche Optomaus-Sensoren meist 16X16, 18X18 oder eine ähnliche Anzahl Pixel in CCD-Technik (charge coupled device). Die Ermittlung der Verschiebungsgröße kann erfolgen, indem die Daten dieser Pixel fortlaufend wiederholt ausgelesen werden und mit denen von einem früheren Zeitpunkt aus der selben Sequenz korreliert und dabei koordinatenmäßig miteinander verglichen werden. Der Vergleich kann mit den jeweils zuletzt ausgelesen Daten erfolgen oder mit Daten aus einem früheren Zyklus der selben Sequenz. Die Daten können zeitlich zueinander korreliert werden. Der Auswertprozess kann digital programmgesteuert erfolgen. Er kann einen Ähnlichkeits-Algorithmus verwenden. Hierzu können die Helligkeitssignale der einzelnen Pixel zunächst in wenige diskrete Helligkeitsstufen unterteilt werden, wodurch sich die Menge der auszuwertenden Information reduziert. Eine Anpassung an die durchschnittliche Bildhelligkeit kann beinhaltet sein, indem die Belichtungszeit variiert und / oder indem die Auswertung der Pixel in Relation mit mindestens einem, an die Durchschnittshelligkeit angepassteh gemeinsamen Vergleichswert erfolgt. Mit Verfahren dieser Art kann erreicht werden, dass der Auswertevorgang auch bei verschieden hellen Untergründen oder Umgebungen korrekt erfolgt.

Verschiebungs-Sensoren, auch wenn sie ursprünglich nur für den Einsatz in Optomäusen und zur Navigation auf Computer-Bildschirmen bestimmt sind, können gemäß der vorliegenden Erfindung vorteilhaft als Sensor eingesetzt werden, indem sie mit der beschriebenen, entfernte Objekte abbildenden Optik kombiniert werden Somit wird deren Verwendung zur Abtastung von entfernten Objekten im freien Raum möglich.

In den meisten Fällen kann die Beleuchtung der Objekte ausschließlich durch das Umgebungslicht erfolgen.

Weitere Vorteile von Sensoren, bei denen sich lichtempfindliches Array und Auswertelektronik auf dem gleichen Chip befinden sind deren niedrige Kosten und geringes Gewicht, sowie deren hohe Auswertegeschwindigkeit.

Als Vorteil einer relativ kleinen Pixelzahl ist die rasche Abtast-Rate zu nennen im Vergleich mit Systemen, die eine Fernseh- bzw. Videokamera benötigen. Die Abtastrate ist für eine ausreichend schnelle Lageregelung von Flugkörpern umso wichtiger, je kleiner und daher rascher-reagierend der Flugkörper ist. Indem auf die hohe Datenmenge eines Videosignals verzichtet wird, kann man im Gegenzug von einer umso höheren Verarbeitungsgeschwindigkeit profitieren. Der Verschiebungssensor kann mit einer Taktfrequenz betrieben werden, die wesentlich niedriger ist als die laut Datenblatt vorgesehene Taktfrequenz. Hierdurch werden längere Belichtungszeiten und daher eine höhere Lichtempfindlichkeit möglich. Bei Verringerung der Taktfrequenz auf 75% bis 10% oder auch weniger erhält man immer noch eine im Vergleich zu Video-Kameras wesentlich schnellere Datenrate.

Im Gegensatz zur Verwendung eines Verschiebungssensors in einer optischen Maus, muss die erfindungsgemäße Vorrichtung zur Erfassung von wesentlich größeren und entfernteren Objekten ausgelegt sein, Es könnte allerdings zu der in einer optischen Maus verwendete Optik eine Zusatz-Optik vorgesehen sein, die so dimensioniert ist, dass sie im Zusammenwirken mit der vorhandenen Linse die im Hauptanspruch definierte Abbildung ergibt. Dieses kann beispielsweise durch eine zusätzliche konkave Linse, etwa nach dem Barlow-Prinzip, oder durch Abbildung in eine Zwischenbild-Ebene erfolgen.

Die Abbildungsvorrichtung kann zweckmäßigerweise für einen auf unendlich eingestellten Focus eingerichtet sein, oder besser noch auf einen solchen Abstand, mit dem sich, zuzüglich der Schärfentiefe, ein Schärfebereich von Unendlich bis zu einem kürzestmöglichen Objektabstand ergibt.

Die Brennweite kann, ausgehend von einer durch den Sensor gegebenen Orts-Auflösung, je nach der erforderlichen Winkelauflösung gewählt werden. Bei der Wahl der Brennweite kann außerdem die erzielte Schärfentiefe (Tiefenschärfe-Bereich) und der maximale Messbereich bezüglich der Geschwindigkeiten berücksichtigt werden. Eine zur Anwendung in ferngesteuerten Klein-Hubschraubem günstige Brennweite liegt in der Größenordnung von 7-25 mm, vorzugsweise ca. 10 -12 mm. Hiermit wird eine ausreichende Winkelauflösung sowie ein ausreichender Geschwindigkeits-Messbereich erreicht, und gleichzeitig eine geeignete Schärfentiefe von ca. 20 cm bis unendlich. Mit Brennweite ist hier die Eigenschaft der Linse gemeint und nicht ihr Abstand (Schnittweite) zur Bildebene.

Die erfindungsgemäße Kombination einer Abbildungs-Optik mit einem Verschiebungssensor zu einer Sensoreinheit hat einen kegelförmigen Erfassungsbereich, der sich in den freien Raum außerhalb der Vorrichtung erstreckt, und dessen Winkel-Breite durch die Größe der lichtempfindlichen Gesamtfläche des Verschiebungssensors und durch die Brennweite der Abbildungsoptik festgelegt wird. Im Gegensatz zu Systemen mit bildgebenden Vorrichtungen wie Videokameras wird in den folgenden Betrachtungen die Winkel-Breite des Erfassungsbereiches meist vernachlässigt und nur die optische Achse oder Haupt-Richtung der Abbildung betrachtet, nachfolgend "Sichtrichtung" genannt.

Gemäß der Erfindung werden Strukturen und Kontraste der Umgebung, des Bodens oder anderer beabstandeter Objekte auf dem Verschiebungssensor optisch abgebildet. Allgemein können die Strukturen, die der beschriebene Sensor zur Erkennung einer Verschiebung benötigt, aus jeder Art von Kontrasten herrühren, die ein Teil der Umgebung oder des Terrains aufgrund von Oberflächentexturen, Details, Konturen oder ähnlichen Eigenschaften aufweist. Diese können beispielweise durch die Ränder einzelner Gegenstände entstehen oder auch, ähnlich wie bei der Funktion einer Optomaus, durch optische Rauhigkeiten auf deren Oberfläche. Fast alle sichtbaren Strukturen, die in einem Bodenbild üblicherweise vorkommen, enthalten genügend solche Kontraste, Strukturen, Texturen, um auch im Flug eine Bildbverschiebung im beschriebenen Verschiebungssensor detektierbar zu machen. Ausnahmen sind Wasseroberflächen, Nebel oder durchgehend Schneedecke.

Indem die Vorrichtung am Vehikel, beispielsweise einem Flugkörper befestigt ist, werden dessen Bewegungen messbar, wie nachfolgend in Punkten a) bis d) beschrieben, ohne hierauf eingeschränkt zu sein.

Allgemein lassen sich sowohl Drehung als auch Translation des Vehikels messen, da beide Bewegungsarten eine Wanderung der optischen Einfallsrichtung des virtuellen Bildes in die Abbildungsoptik bewirken. Über die Abbildung werden Einfalls-Winkel in eine proportionale Bildverschiebung auf dem Venschiebungssensor umgewandelt und können somit gemessen werden. Die Brennweite der Abbildungsoptik ist dabei der Proportionatitätsfaktor.

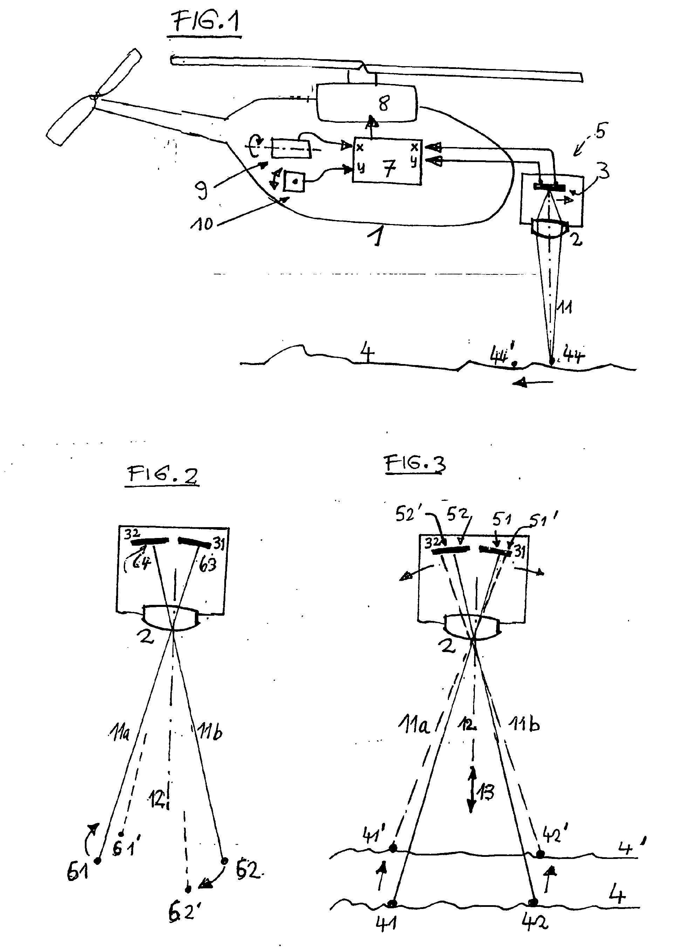

Je nach Anordnung und Ausführung der vorliegenden Erfindung können verschiedene Messgrößen der Position und Orientierung des Vehikels, also Bahn-Daten über Fahrt- bzw. Flugbewegungen, erfasst und gemessen werden:
a) Um Drehungen des Vehikels zu messen; etwa Rollen, Nicken oder/ oder Gieren, wird die Sensorvorrichtung so montiert, dass der Sichtstrahl, oder zumindest eine vektorielle Komponente davon, quer zur Drehachse liegt; und im Sensor die Bildverschiebung in der Komponente senkrecht zur Drehachse gemessen. Um Flugbewegungen zu stabilisieren oder unerwünschte Schwankungen zu verhindern, kann zudem ein Regelkreis gebildet werden, indem der Messwert in einem lstwert-Sollwert-Vergleich zur Bildung eines Stellwertes herangezogen wird, der zur Korrektur an das entsprechende Steuerorgan geleitet wird. Eine für Heading-Stabilisierung geeignete Ausrichtung ist schräg nach vorne-abwärts und/oder hinten-abwärts.
   Außerdem lässt sich durch Abtastung in Richtung auf ein Ziel eine Verfolgung erreichen. Hierzu wird wie beschrieben ein entsprechender Regelkreis gebildet. Der Stellwert kann eine Nachführung bewirken durch Steuerung der Ausrichtung, oder, als Folge der Ausrichtung, auch eine Kurs-Lenkung auf das Ziel bewirken. In beiden Fällen wird die Ausrichtung der optischen Abtastvorrichtung beeinflusst und unterliegt einer Selbstregulierung. Dies lässt sich zur Zielverfolgung verwenden, auch bei selbst bewegten Objekten. Hierzu wird der Sichtstrahl zunächst auf das Ziel gerichtet; diese Ausrichtung wird über die Regelung beibehalten.
   Eine andere Anwendung ist die Nachführung der optischen Vorrichtung über eigene Servomotoren. Dies kann zur Stabilisierung einer Kamera für Film und Foto verwendet werden. Dabei können vorteilhafterweise mehrere störende Bewegungs-Arten stabilisiert werde: Erstens die Wackelbewegungen des Vehikels bzw. Flugkörpers, zweitens das Weglaufen des Bildausschnitts aufgrund der Fahrt, und drittens eine eventuelle Eigenbewegung des Zielobjektes. Herkömmliche Kreiselstabilisierungen können nur erstere Einflüsse stabilisieren. Ein weiterer Vorteil ist die schon beschriebene wesentlich schnellere Reaktion eines Verschiebungssensors gegenüber der Bildfrequenz der Filmaufnahme. Eine solche Vorrichtung kann auch zur allgemeinen Verwendung ohne Einschränkung auf ein Vehikel vorgesehen sein. Hierzu befindet sich eine erfindungsgemäße Sensoreinheit zusammen mit einer Kamera auf einer mit Servomotoren bewegbaren Kamera-Plattform und wird hiervon, gemeinsam mit der Kamera, bewegt.
b) Um Translationsbewegungen zu messen, wird die optische Sichtrichtung zumindest in einer vektoriellen Komponente quer zur Richtung der zu messenden Bewegung ausgerichtet. Das Ausmaß der detektierten Bildverschiebung ist proportional zur Wegstrecke des Vehikels. Entsprechendes gilt für die betreffenden Geschwindigkeiten. Ferner ist die Bildverschiebung, aufgrund der Strahlgeometrie, umgekehrt proportional zum Abstand längs der Sichtrichtung, und proportional zur Brennweite sowie proportional zum Sinus des Winkels zwischen Bewegungsrichtung und Sichtrichtung.
   Wenn nur Translationsbewegung gemessen werden sollen, können die die unter (a) beschriebenen Drehungs-Einflüsse stören. Das optische Messsignal kann um diese Einflüsse bereinigt werden, indem ein die Drehung repräsentierendes Drehsignal mit dem Signal des Verschiebungssensors verrechnet wird. Ein Drehsignal lässt sich, etwa mithilfe eines weiteren Messinstrumentes, etwa eines Gyroskops, leicht gewinnen. Je nach Polarität kann die Verrechnung aus einer Subtraktion, Addition oder, allgemein nennend, einer Mischung bestehen. Dabei können Signale vorher behandelt, beispielsweise differenziert oder integriert worden sein. Dieses Kompensationsverfahren erspart die beim zitierten Stand der Technik übliche kardanische Aufhängung einer optischen Aufnahmevorrichtung (welche dort gewöhnlich eine Videokamera ist).
   Um Horizontalbewegungen eines Flugkörpers zu messen, kann die Sichtrichtung um Bezug zum Rumpf nach unten ausgerichtet sein. Dann wandert - bei normaler Fluglage - die messbare optische Einfallsrichtung der erfassten Bodenstrukturen mit der horizontalen Flugbewegung. Mit einem Regelkreis wie oben geschildert, angewendet auf horizontale Bewegungsgrößen, lassen sich folglich auch die horizontalen Bewegungen stabilisieren, z.B. die Geschwindigkeit oder Position über Grund. Bei einem Hubschrauber kann dies zur horizontalen Stabilisierung des Schwebeflugs über Ansteuerung der zyklischen Rotorblattverstellung dienen.
   Der horizontale Messwert ist wie erwähnt zum Sichtabstand umgekehrt proportional. Um einen davon unabhängigen Messwert zu erhalten, kann ein den Abstand messendes Instrument vorgesehen sein, und - zumindest in einem Teilbereich des möglichen Abstandsbereiches - das, wahlweise um Neigungs-Einflüsse bereinigte, optische Geschwindigkeits-Meßsignal multipliziert werden mit einem Faktor, der mit zunehmendem gemessenen Abstand stetig zunimmt. Zur Distanzmessung eignet sich ein Mikrowellen- oder Ultraschall Radar, wie es als Einpark-Hilfe oder bei Autofokus-Kameras bekannt ist, oder ein optischer Abstandssensor nach dem Lichttaster-Prinzip, wie er etwa in der DE 40 04 530 A beschrieben ist. Diese HöhenKompensation kann aber auch entfallen oder nur zu einem verminderten Anteil erfolgen, beispielsweise dann, wenn der Messwert nur für eine Stabilsierungs-Regelung verwendet wird. Bei einem Hubschrauber konnte eine Stabilisierung der Schwebeposition über eine PID-Regelschleife ohne Höhenkompensation erreicht werden, die, je nach Justage der Regelverstärkungen, bei allen Bodenabständen in einem Verhältnis von bis zu 1 : 10 sehr sauber und im Bereich von 1 : 30 noch ordentlich arbeitet.
   Bei Entfallen dieser Kompensation ergibt sich als Vorteil, dass die Messung empfindlicher und demnach die Regelung um so "härter" wirkt, je niedriger die Flughöhe ist. Bei einem vorgegebenen Sollwert für die (unkompensierte) Geschwindigkeit wird die echte Geschwindigkeit in Bodennähe automatisch verringert. Mit diesem Verhalten ergibt sich nebenbei der Effekt, dass im Moment der Geschwindigkeits-Verringerung eine momentane Aufwärtsbewegung erzeugt wird, aufgrund der Umsetzung der kinetischen Energie (außer bei Rückenwind schneller als ground speed). Bei Horizontalflug über Bodenerhebungen wird somit einer Kollision durch kurzfristiges Aufsteigen vorgebeugt. Dieses Verhalten kann auch bei vorhandener Höhenkompensation erreicht werden, nämlich dadurch, dass das kompensierende Höhensignal zeitlich verzögert wird.
c) Bei ungefähr bekannter Geschwindigkeit kann auch ein Abstand gemessen werden, beispielsweise zum Boden oder zu einem Objekt. Hierzu wird das optische Meßsignal als Reziprokwert für den Abstand herangezogen. Zum Beispiel kann eine bekannte Geschwindigkeit durch den optischen Geschwindigkeits-Messwert dividiert werden. Bei Verwendung dieses Messwertes in einem Regelkreis kann die Division entfallen, sofern der Sollwert schon als Kehrwert definiert wird.
   Eine Anwendung ist die Kontrolle des Bodenabstandes bei Tragflächen-Flugzeugen. Da hier die horizontale Fluggeschwindigkeit ungefähr bekannt und meist in etwa konstant ist, erhält man ein Maß für die momentane Flughöhe über Grund, auch während Überfliegen von Bodenerhebungen. Somit wird eine frühzeitige Annäherungs-Erkennung und Kollisionsvermeidung gegenüber sichtbaren Gegenständen möglich. Die Flughöhe kann auf einen Mindest-Bodenabstand begrenzt oder geregelt werden . Die Sichtrichtung kann hierfür vorteilhafterweise schräg nach vome-unten ausgerichtet sein, um einen zeitlichen Verlauf zu erhalten Anstelle zum Boden kann auch der Abstand zu einem dort stehenden Objekt gemessen werden, welches beispielsweise eine Erhebung bildet
d) Allgemein können Bewegungen in mehreren verschiedenen Koordinaten gemessen und in Relation zueinander gesetzt werden. Somit können gemischte Messwerte auch voneinander getrennt werden, wie in unten beschriebenen Ausführungsbeispielen und Figuren 2 bis 4 erläutert. Ferner ist eine Messung von Abständen und Abstandsänderungen auch längs einer kombinierten Sichtrichtung möglich. Hiermit ist die Messung einer Steig- bzw. Sinkrate, oder eine Annäherungs-Erkennung möglich.

Die verschiedenen Messgrößen werden hier allgemein "Bewegungsgrößen" genannt. Dies gilt sowohl für die Orts- als auch für die Winkelgrößen. Bewegungsgrößen können statischer Art sein, wie beispielsweise Position, Abstand, oder Lage und /oder dynamischer Art sein, wie beispielsweise Geschwindigkeit und Beschleunigung. Dementsprechend werden die Begriffe "Bewegung, Drehung, Neigung, Translation" etc. hier stets allgemein verwendet, d.h. sowohl für Positions-Werte auch für die entsprechenden Änderungs-Geschwindigkeiten.

Bewegungsgrößen können relativ zum Boden, zu boden-bezogenen, bewegten oder auch zu anderen fliegenden Objekten gemessen werden.

Das Ausgangssignal des optischen Sensors, nachfolgend kurz "Sensorsignal" genannt, kann erfindungsgemäß auf mehrere Arten, die im Folgenden beschrieben werden, ausgewertet und verarbeitet werden. Optomaus-Sensoren haben häufig für jede der zwei Koordinaten einen Quadratur-Ausgang, der auf 2 Leitungen ein Inkremental-Signal liefert, wobei jede Verschiebung als Sprung oder als eine Anzahl von Sprüngen von Stufe zu Stufe richtungsgetreu gemeldet wird. Ebenso kann eine serielle Schnittstelle oder eine anderen beliebige Art der Signalübertragung zur Ausgabe der Daten verwendet werden. Häufig werden bei jedem Auslesevorgang die seit dem vorigen Auslesen erfolgte Anzahl der Änderungssprünge ausgegeben.

Durch entsprechende Auswertung lassen sich beispielsweise, ohne hierauf eingeschränkt zu sein, Informationen gewinnen über a) Richtung und Geschwindigkeit bzw. Winkelgeschwindigkeit der Bewegung, also Änderungsraten, b) Die Weite der Bewegung, also

Positions- oder Winkelwerte und c) Beschleunigungswerte.
a) Änderungsraten lassen sich darstellen mittels einer zeitlichen Differenzierung. Dies entspricht einer Frequenzmessung der inkrementalen Verschtebungssprünge. Bei einem Sensor, der die Verschiebung in einzelnen inkrementalen Sprüngen ausgibt, wird hierzu die Frequenz dieser Sprünge gemessen, etwa die Frequenz der ausgegebenen Quadratursignale.
   Es ist vorteilhaft, wenn der Geschwindigkeits-Messwert kontinuierlich oder zumindest quasikontinuierlich dargestellt wird. Zur Gewinnung eines geeigneten Geschwindtgkeits-Messwertes kann in fortlaufenden Zeitintervallen, die sinnvollerweise klein gewählt werden können, die jeweilige Summe der pro Intervall auftretenden Ausgangssprünge mit Vorzeichen herangezogen werden, etwa mittels Auf- und Abwärtszählung oder durch Auslesen der seit der letzten Ausgabe erfolgten Änderung, und dann die erhaltene Summe jeweils durch die Länge des Zeitintervalls dividiert werden. Haben die Zeitabschnitte konstant die gleiche Länge, so kann die Division entfallen. Alternativ kann bei jedem Änderungs-Sprung des Signals die Zeitspanne seit dem vorangehenden Änderungssprung ermittelt werden, davon der Kehrwert gebildet werden und mit einem der Änderungsrichtung entsprechenden Vorzeichen versehen werden.
   Zusätzlich kann der so ermittelte Frequenzwert auch vor Eintreffen der nächsten Änderung rechnerisch schon aktualisiert werden Hierzu wird, nach Ablauf einer der Frequenz entsprechenden Periodendauer, der Frequenzwert fortwährend oder schrittweise heruntergesetzt auf einen Wert, der dem Kehrwert der aktueltverslrichenen Wartezeit entspricht, sofern der Kehrwert kleiner ist als der letzte Frequenzwert.
b) Positionswerte lassen sich darstellen durch Auf-/Abwärtszählung oder Summierung der inkrement-Sprünge des Sensorsignals, etwa indem man die Sprünge richtungsgetreu zählt oder die Inkremente integrierend aufsummiert, vergleichbar mit der üblichen Funktion einer Computermaus auf einem Bildschirm.

Alternativ oder in Kombination hierzu kann die Position durch eine fortlaufende zeitliche Integration eines Frequenz-Messwertes dargestellt werden, dessen Gewinnung wie oben beschrieben erfolgen kann. Dies ermöglicht, dass man eine oben beschriebene Kompensation der Einflüsse anderer Bewegungen auf die Messung schon vor der Integration vornehmen kann, und man die integrierten Ergebnisse schon kompensiert erhält.

Je nach Ausgestaltung resultieren auch betreff der Positionsmessung verschiedene Mess-Möglichkeiten. Bei Sichtrichtung nach unten erhält man ein Maß für die bodenbezogene Flugposition.

Unter Benutzung eines aus der erfindungsgemäßen Vorrichtung stammenden Messwerts kann ein Regelkreis gebildet werden, wobei in einem Regler 7 der Messwert zur Erzeugung eines Stellwertes herangezogen wird, der die Bewegung regelt. Hierbei können die als PID bekannten Verfahren verwendet werden. Istwerte können beliebige erfindungsgemäß erzeugte Messwerte sein, also sowohl Geschwindigkeits- als auch Positionsgrößen oder anteilsweise eine Mischung. Zusätzlich können auch einfache oder mehrfache Integral- und Differenzialwerte gebildet und herangezogen werden. Durch erneutes Differenzieren des Frequenz-Messwertes kann man beispielsweise ein Maß für die Beschleunigung erhalten.

Zusätzlich kann eine PID-Regelung auch die Proportional-Differenzial- und/oder IntegralAnteile von Signalen anderer Bordinstrumente heranziehen, z.B. eines Piezo-Kreisels.

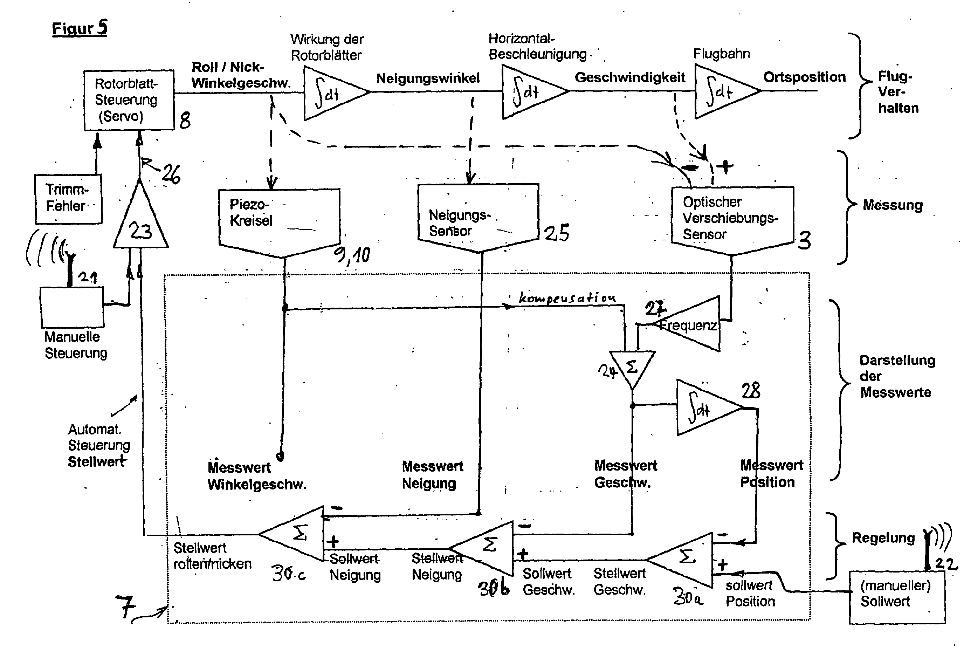

Manuelle Steuersignale können sowohl dem Ausgangssignal des Reglers (Stellwert) überlagert werden, sodass die Handsteuerung ergänzt und stabilisiert wird, als auch in die Regelung als Sollwert einbezogen werden, z.B. indem sie eingangsseitig dazugemischt werden, sodass ein Sollwert-Istwert-Vergleich entsteht, wobei der Sollwert aus dem manuellen Steuersignal stammt. Eine detaillierte Beschreibung einer Regelung folgt beim ersten Ausführungsbeispiel und bei Figur 5.

Bei ferngelenkten Flugkörpern können die zur Regelung benötigten Teile mitfliegen oder auch am Boden stehen und über Funkkontakt verbunden sein.

Statt eines Optomaus-Sensors können gemäß einem Beispiel, das nicht Gegenstand der Erfindung ist auch andere optoelektronische Vorrichtungen als Verschiebungssensor verwendet werden. Der Verschiebungssensor kann mindestens zwei benachbart angeordnete photoelektrische Lichtempfänger enthalten, deren Distanz zueinander einer Größenordnung entspricht oder ungefähr ähnelt, die der Viertetwellenlänge von im Abbild der Bodenstrukturen häufig vorkommenden Ortsfrequenzen entspricht. Durch die Bewegung der optischen Strukturen entstehen in den Lichtempfängern phasenverschobene Wechselsignale. Diese Wechselsignale werden in eine die Zeit-und/oder Phasenunterschiede auswertenden Schaltung geleitet. Eine solche Schaltung kann eine Zeitvergleichsschaltung sein, wie sie bei richtungsempfindlichen Lichtschranken verwendet wird, oder eine Phasenvergleichsschattung. Eine solche Schaltung erkennt an der Phasenlage, welche der beiden Signale dem anderen vorauseilt bzw. hinterherhinkt, und dementsprechend die Bewegungsrichtung, und zu einem gewissen Genauigkeitsgrad auch die Geschwindigkeit. Auch kann die Schaltung einer Inkremental-Auswertung nach dem Quadratur-Prinzip entsprechen und dementsprechend analog oder digital aufgebaut sein. :Die Messgenauigkeit einer solchen Vorrichtung ist jedoch meist geringer als die eines mit Array und integrierter Auswertelektronik ausgestatteten Verschiebungssensors, da der gleichzeitig erfasste Abschnitt der Bodenstrukturen kleiner ist.

Das optische Abbild kann wahlweise mit einem Restlichtversärker verstärkt oder einer anderen zwischengeschalteten optischen Vorrichtung behandelt werden, bevor es auf den Verschiebungssensor gelangt.

Alle beschriebenen Signalverarbeitungs- und Rechenvorgänge können digital erfolgen, z.B. in einem programmgesteuerten Mikroprozessor, oder in einer analogen Schaltung verwirklicht werden. Mehrere der hier beschriebenen oder in den Ansprüchen bezeichneten Teil-Verfahren können zu einem gemeinsamen Prozess zusammengefasst werden und/oder in einem gemeinsamen Prozessor durchgeführt werden.

Die beschriebenen Verfahren können auch mit Infrarotlicht erfolgen. Dementsprechend beinhalten die Begriffe "Sicht-", "Licht-" und "Abbildung" stets alle optischen Strahlungsarten.

Für Verwendung im Dunkeln kann die entsprechende Vorrichtung mit einer Lichtquellen kombiniert werden. Vorzugsweise hat sie eine gerichtete Abstrahlung und ist auf die abzutastende Stelle ausgerichtet.

Nachfolgend wird an Ausführungsbeispielen die Funktion weiter erläutert. Es zeigen:
- Figur 1:: Erstes Ausführungsbeispiel, zur Hubschrauber-Stabilisierung,
- Figur 2:: Zweites Ausführungsbeispiel, zur Messung und Stabilisierung einer Drehung um die Hochachse,
- Figur 3:: Drittes Ausführungsbeispiel, zur Messung einer Vertikatgeschwindigkeit oder eines Abstandes zu einem Objekt,
- Figur 4:: Viertes Ausführungsbeispiel zur kombinierten Messung mehrerer Freiheitsgrade und
- Figur 5:: Blockdiagramm einer Regelung im ersten Ausführungsbeispiel.

**Figur 1** zeigt ein erstes Ausführungsbeispiel zur Messung und Stabilisierung der Horizontalbewegungen eines Hubschraubers 1. Die Linse 2 wirkt als Objektiv und bildet einen sichtbaren Abschnitt des Bodens 4 auf den optischen Verschiebungssensor 3 mit integrierter Auswerte-Einheit ab. Bei einer Vorwärtsbewegung wandert Bodenpunkt 44 optisch zur Position 44', und dementsprechend verschiebt sich sein Abbild auf dem Sensor 3. Der Sensor 3 gibt die inkrementellen Messwerte der Verschiebung in zwei Koordinaten (x und y) aus. Wenn die Sichtrichtung wie gezeichnet ungefähr nach unten ausgerichtet ist, erhält man Informationen über Fluggeschwindigkeit über Grund, in beiden Komponenten Vorwärts- und Quer-Richtung.

Diese Messwerte können zur Stabilisierung der Flugroute oder eines stillstehenden Schwebefluges verwendet werden. Hierzu ist die Regel-Elektronik 7 eingangsseitig mit den optischen Meßsignalen verbunden und gibt ausgangsseitig Stellwerte zur Steuerung des Flugkörpers, wobei zumindest Teile der gesamten Steuerung beinhaltet sind - in diesem Fall die zyklische Rotorblattverstellung 8, etwa mit einer Taumelscheibe, welche die Neigung der Hauptrotor-Ebene steuert und damit die horizontale Beschleunigung des Helikopters beeinflusst. Ein Beispiel für die Funktion einer Regelung 7 ist weiter unten sowie bei Figur 5 detailliert dargestellt.

Der Messwert ist jedoch nicht nur von der Horizontalbewegung, sondern auch von Drehbewegungen abhängig, die der Flugkörper gleichzeitig ausführen kann, etwa Rollen und Nicken. Dieser Einfluss wird durch Beimischung eines Drehsignals kompensiert. Das Drehsignal kann beispielsweise zur Winkelgeschwindigkeit der Drehung proportional sein, oder auch zu anderen Drehgrößen wie beispielsweise der Winkelstellung. Verschieden Möglichkeiten zur Gewinnung eines zur Kompensation geeigneten Drehsignals sind nachfolgend beschrieben.

Das Drehsignal kann mit einem Kreisel oder einem piezoelektrischen Drehsensor 9, 10 (Piezo-Gyro) gewonnen werden. Solche zusätzichen Meßaufnehmer können am Flugkörper angebracht sein oder in der erfindungsgemäßen Vorrichtung 5 an- oder eingebaut sein. Weil ein Piezo-Gyro die Winkelgeschwindigkeit misst, erfolgt die Kompensation sinnvollerweise durch Mischung des Gyro-Signals in ein vom Verschiebungssensor, etwa durch Differenzierung, gewonnenes Frequenz-Signal, das schon die Geschwindigkeit repräsentiert.

Bei einem Helikopter kann ein Drehsignal erzeugt werden, indem ein Beschleunigungssensor mit der Hauptrotorwelle mitbewegt und von der Rotorachse beabstandet angeordnet ist, wobei die Beschleunigungskomponente parallel zur Rotorachse gemessen wird und der fortlaufende Messwert in Abhängigkeit der Rotordrehung zyklisch phasenbezogen ausgewertet wird.

Drehungen der Rötorebene bewirken wie bei einem Kreisel Präzessionskräfte, die im Beschleunigungssensor als zyklisch sich ändernde Beschleunigungen auftreten und gemessen werden. Die Amplitude der Änderung ist ein Maß für die Winkelgeschwindigkeit der zu messenden Drehung; die Phasenlage gegenüber der Rotordrehung ist ein Maß für die Richtung der zu messenden Drehung und die Orientierung ihrer Achse. Die phasenbezogene Auswertung kann geschehen, indem eine mit der Rotordrehung synchronisierte getaktete Sampling-Folge erzeugt wird, nach deren Takt das Meßsignal aufgeteilt gemessen oder umgeschaltet wird, beispielsweise in Quadranten. Hierdurch erhält man Messwerte der Drehung in Komponenten, etwa der Nick- und Roll-Achse, aufgeteilt. Die Synchronisation kann über einen die Umdrehungen der Rotorwelle abtastenden Drehgeber erfolgen. Vorteilhafterweise treten die gemessenen Kräfte als zyklische Änderungen auf. Daher muss der Beschleunigungssensor keine absoluten Werte messen können, sondern nur die Änderungen.

Daher kann als Beschleunigungssensor ein preisgünstiger piezoelektrischer Kraftwandler verwendet werden, dessen Messwert nur kapazitiv angekoppelt werden kann. Außerdem ergibt sich der Vorteil, dass Nullpunktfehler des Messwertes von vorne herein dadurch entfallen, dass der Messwert in Form einer Amplitude gewonnen wird. Eine Signatübertragung vom rotierenden Sensor zur Regelvorrichtung kann über Funk, optoelektronische Wandler, induktive Signal-Ankopplung oder Schleifkontakt erfolgen. Dieses Messverfahren kann auch ohne optische Messung allgemein zur Stabilisierung eines Drehflüglers verwendet werden, dessen Neigung in Abhängigkeit eines Messwertes geregelt wird. Hierzu genügt es, wenn ein Beschleunigungssensor mit der Hauptrotorwelle mitbewegt und von der Rotorachse beabstandet angeordnet ist, und die Beschleunigungskomponente parallel zur Rotorachse gemessen wird, und der fortlaufende Messwert in Abhängigkeit der Rotordrehstellung und synchron dazu zyklisch phasenbezogen ausgewertet wird.

Um auch ohne Verwendung eines eigenen Sensors ein Drehsignal zur Kompensation der Dreh-Einflüsse zu erhalten, kann als Drehsignal ein Steuersignal herangezogen werden, das in ein Steuerorgan eingespeist wird, welches die betreffende Drehung steuert, z.B. das ServoSignal für die Taumelscheiben-Neigung. Das funktioniert, weil üblicherweise der Flugkörper mit einer Roll- bzw. Nick-Geschwindigkeit folgt, die recht genau zur Ansteuerung proportional ist. Ein solches Steuersignal ergibt daher ein geeignetes Maß für die Winkelgeschwindigkeit zur Verwendung als kompenserendes Drehsignal. Dabei erfolgt die Kompensation durch Mischung des Steuersignals in das aus dem Verschiebungssensor gewonnene Geschwindigkeits-Signal, welches durch Frequenzmessung darstellbar ist: Wenn das Steuersignal selbst mittels eines erfindungsemäßen Regelkreises erzeugt wird, dessen Istwert das zu kompensierende Meßsignal beinhaltet, dann entspricht die Kompensation einer Rückmischung innerhalb des Regelkreises in Form einer Gegenkopplung vom Stellwert zum Istwert, welcher die Regelvertärkung herabsetzt. Die kompensierende Einmischung des Drehsignals kann in diesem Fall, funktionsmäßig identisch, dadurch realisiert werden, dass Regelkreis einfach eine entsprechend geringere Verstärkung aufweist.

Eine alternative oder kombinierbare Möglichkeit zur Gewinnung eines Drehsignal ist, hierzu einen zweiten optischen Verschiebungssensor zu verwenden, der erfindungsgemäß wie beschrieben als Drehsensor arbeitet und mit seiner Sichtrichtung gegenüber dem ersten Sensor verschieden ausgerichtet ist.

**Figur 5** zeigt beispielhaft ein Blockdiagramm einer Regeleinheit 7 für Hubschrauber. Der Regelkreis kann für die Nick- und Roll-Achse gleichermaßen aufgebaut sein und ist daher nur ein Mal abgebildet. Bei herkömmlichem manuellen Betrieb werden Steuersignale über den Empfänger 21 an die Rotorblatt-Steuerung 24 gegeben. Die erflogene Ortsposition resultiert aus dem Flugverhalten, das einer Reihe mehrerer zeitlichen Integrationen entspricht, wie selbsterklärend abgebildet. Die Gesamtheit dieser Bewegungsgrößen stellt für jeden Zeitpunkt die aktuelle Flugbewegung dar. Der Einfluss der Bewegungen auf die Messung ist gestrichelt dargestellt. Unterhalb der Messinstrumente 9, 10, 25, 3 sind die Abläufe der Regeleinheit 7 dargestellt, aufgeteilt in die Darstellung der Messgrößen und die Regelung selbst mit Istwert-Sollwert-Vergleich.

Aus dem Signal des Verschiebungssensors 3 wird zunächst eine Frequenz ermittelt 27. Die Frequenz kann wie beschrieben um die Einflüsse der Neigung und ggf. Flughöhe bereinigt werden. Dies geschieht hier durch Addition 24. Die nachträgliche Integration 28 kann eine Summierung oder Zählung sein, und stellt ein Positions-Signal her, wobei die differenzierende Wirkung der Frequenzmessung wieder rückgängig gemacht wurde.

Ein Sollwert des Flugweges oder der Fluggeschwindigkeit sei vorgegeben. Das kann beispielsweise ein Geschwindigkeits- oder Ortsvektor sein, parametrisiert als Funktion der Zeit. Diese Funktion kann vor dem Flug programmiert sein oder während des Fluges vorgegeben werden, oder im Spezialfall des Schwebefluges Null sein (als Geschwindigkeitsvektor) bzw. konstant (als Ortsvektor). Der aktuelle Sollwert wird aufgerufen, etwa über den FunkEmpfänger 22, und mit dem optischen Messwert durch Subtraktion 30a verglichen. Die ermittelte Differenz entspricht der Momentan-Abweichung von der Soll-Route in 30a bzw. Soll-Geschwindigkeit im (gezeichneten) Falle eines Ortsvorgabe-Sollwertes kann die Regelung erfolgen, indem zunächst die Ortsabweichung 30a als Stellwert für eine Rückflug-Geschwindigkeit definiert wird und diese Geschwindigkeit wiederum geregelt wird 30b. Nach dem PID-Verfahren kann gleichbedeutend auch eine Mischung aus Orts- und Geschwindigkeits-Messwerten gemeinsam geregelt werden.

Proportional und entgegengesetzt zur Abweichung der Geschwindigkeit wird ein Neigungs-Stellwert 30b definiert, gemäß dem die Neigung der Hauptrotor-Ebene gesteuert werden soll. Auf die Neigung würde der Helikopter mit einer zur Neigung proportionalen Horizontal-Beschleunigung reagieren, somit würde sich die Fluggeschwindigkeit proportional zum zeitlichen Integral der Neigung ändern und der Regelkreis wird geschlossen.

Um die Neigung auf den Sollwert zu bringen, werden die Stellglieder der Taumelscheibe 8 gesteuert. Da der Hubschrauber eine Steuerung seiner Neigung aber nicht direkt, sondern nur über die Geschwindigkeit ihrer Änderung (Winkelgeschwindigkeit) erlaubt, ist die Neigung aus der Stellung der Stellglieder nicht direkt bekannt. Zur Regelung der Neigung ist es daher von Vorteil, wenn ein eigener Messwert hiervon verfügbar ist. In Figur 5 ist hierfür ein Neigungssensor 25 vorgesehen, der einen eigenen Sollwertvergleich (30c) ermöglicht Das Resultat wird über einen Mischer oder Umschalter 23 als Stellwert 26 an die Rotorsteuerung 8 gegeben.

Als Neigungssensor kann z.B. eine Vorrichtung gemäß erwähnter RU-A-9300250 verwendet werden. Diese ist jedoch ungenau. Alternativ oder zusätzlich kann aus dem Signal eines Piezo-Kreisels 9, 10, das die Neigungs-Winkelgeschwindigkeit angibt, dessen zeitlichem Integral gebildet werden, und somit, gemäß der Funktion eines künstlichen Horizontes, die Rotomeigung darstellt. Problematischerweise fällt jedoch bei der Integration eine undefinierte Integrationskonstante an, entsprechend einer unbekannten Schräglage des Horizontes. Sie kann von der Lage im Moment des Einschaltens sowie auch von geringen Driften herrühren und würde die Regelung erheblich stören.

Die Neigung kann gemessen werden, indem eine aus dem optischen Verschiebungssensor 3 gewonnene, zur Geschwindigkeit proportionale Messgröße 24 in mindestens einem Teil ihres Frequenzbereiches zeitlich differenziert wird. Dies funktioniert deshalb, weil der Helikopter in üblichen Flugsituationen proportional zu seiner Neigung beschleunigt, und die Beschleunigung durch Differenzierung der gemessenen Geschwindigkeit dargestellt werden kann..

Durch den Differenzial-Vorgang auf das optische Meßsignal, das in Stufen ausgegeben wird, können jedoch aus den Inkrement-Sprüngen störende Unstetigkeiten entstehen. Der Messwert für die Neigung hergestellt werden als eine Kombination aus sowohl der vom Verschiebungssensor erhaltenen und zeitlich differenzierten Messgröße als auch dem zeitlich integrierten Signal eines zur Winkelgeschwindigkeit der Neigung proportionalen Drehsignals. Hierbei können vom differenzierten Messwert insbesondere die höherfrequenten Spektralanteile geringer gewichtet werden und vom integrierten Signal die niederfrequenteren Spektralanteile und der Gleichsignal-Anteil geringer gewichtet werden. Auf diese Weise sind sowohl die geschilderten Probleme der Integrationskonstante und Nullpunkt-Drift gelöst, da sie durch Herausnehmen der tiefen Spektralanteile wegfallen, als auch der Unstetigkeiten, da sie durch Absenkung der hohen Spektralanteile geglättet werden. Die jeweils fehlenden Anteile können durch das andere Signal ersetzt werden. Die auf das optische Meßsignal resultierende Kombination von Differenzieren und Tiefpass kann gleichbedeutend auch als Hochpass ersten Grades dargestellt und erzeugt werden; die auf das Gyro-Signal resultierende Kombination von Integrieren und Hochpass kann gleichbedeutend auch als Tiefpass ersten Grades dargestellt und erzeugt werden.

Als Drehsignal für diese Neigungs-Regelung kann jedes der schon bei der Dreh-Kompensationbeschriebenen Verfahren verwendet werden, wie etwa Piezo-Kreisel oder Steuer-Stellwert. Alternativ oder in Kombination hierzu kann auch hier das Drehsignal wie oben beschrieben erzeugt werden.

Die Regelung der Neigung kann mit der Regelung der Horizontal-Bewegung zusammengefasst werden, indem die beschriebenen Messgrößen sowohl für Neigung als auch für Bewegung (Geschwindigkeit und /oder Position) gemischt und somit gemeinsam geregelt werden. Die explizite Trennung der Vorgänge "Darstellung der Messwerte" und "Regelung" erfolgte zum besseren Verständnis, ist aber für die Realisierung nicht wesenlich. Allgemein können proportionale, differenzierte und ggf. integrierte Anteile des optischen Meßsignales parallel in den Reglekreis eingemischt werden, was dazu führt, dass die beschriebene Regelung in ihrer Gesamtheit gleichbedeutend in Form einer gemeinsamen PlD-Regelschleife realisiert werden kann.

Durch Verwendung eines Integrat-Signal-Zweiges im Regelkreis wird eine ortsfeste Regelung erreicht, wodurch ein Schwebeflug so stabilisiert wird, dass auch nach zeitweisen Abweichungen wie Störungen, Windstöße und dgl. die ursprüngliche Position wieder hergestellt wird.

Durch Berechnung eines Integrals aus den Verschiebungswerten kann ein orts-proportionaler Messwert gewonnen werden. Bei der Ermittlung der absoluten Ortsposition in bodenbezogenen Koordinaten können die Gier-Bewegungen kompensierend berücksichtigt werden. Hierzu können die inkrementellen Sensorsignale beider Sensor-Koordinaten integrierend aufsummiert werden, wobei, stellvertretend für zwei Bodenkoordinaten, zwei integrationssummen vorzusehen sind, und wobei die Ausrichtung des Sensors bezüglich einer zu den Bodenkoordinaten senkrechten Drehachse zusätzlich gemessen wird, und die aufzusummierenden Sensorsignale-Inkremente vor ihrer Aufsummierung vektoriell gedreht werden, gesteuert von der gemessenen Ausrichtung.

Ein Sollwert kann, anstatt für eine Position, auch für eine Geschwindigkeit vorgegeben werden. Ein solcher Sollwert kann zunächst integriert werden und dann als Positions-Sollwert verwendet werden. Es kann auch auf die ortsproportionalen Ist- und Sollwerte verzichtet werden und die Regelung auf die Geschwindigkeiten beschränkt werden. Die Mischung 30a und Integration 28 können weggelassen werden und der manuelle Stellwert 22 kann direkt einem Geschwindigkeits-Vergleich 30b zugeführt werden.

Die beschriebenen Regelverfahren, insbesondere die zur Regelung der Neigung eines Hubschraubers, können auch ohne Verwendung eines optischen Sensors zur Flugstabilisierung verwendet werden. Hierbei kann auf die ortsproportionalen Ist- und Sollwerte verzichtet werden und die Regelung auf den Neigungswinkel beschränkt werden.

Anstelle des optischen Sensors 3 oder in Kombination hiermit kann ein beliebiges nach dem Stand der Technik bekanntes Navigationssystem verwendet werden, um Istwerte 28 der Position oder der Geschwindigkeit zu gewinnen und damit das hier beschriebene Regelverfahren zu verwirklichen. Hierzu muss das hier beschriebene Regelverfahren nur so abgewandelt werden, dass der Sensor 3 und die Frequensmessung 27 entfällt und ein Positions-Messwert 28 und/oder Geschwindigkeits-Messwert von einem alternativen Meßsystem herangezogen wird.

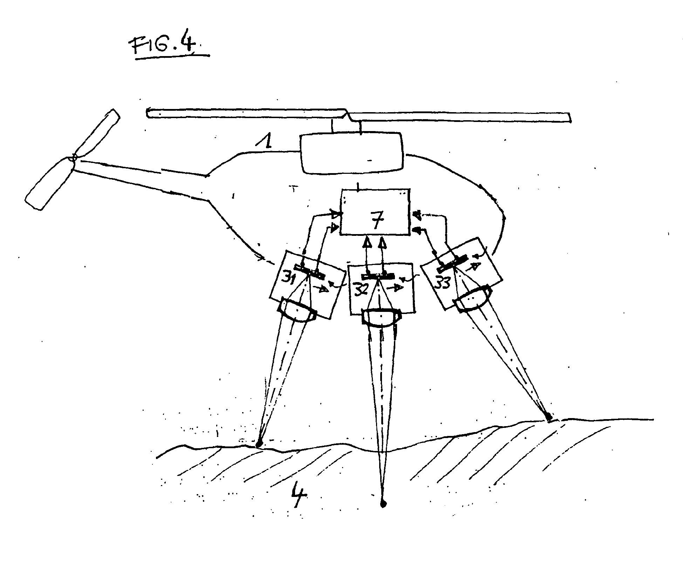

**Figur 2** zeigt ein zweites Ausführungsbeispiel der Erfindung: Zur Messung einer Drehbewegung oder -Geschwindigkeit sind mindestens zwei Verschiebungssensoren 31 und 32 vorhanden. Beide Sensoren können hinter einer gemeinsamen Linse 2 oder sonstigen Abbildungsoptik versetzt angeordnet sein, oder auch eigene Abbildungsoptiken haben; wie in Figur 4 gezeigt. Die sich hierdurch ergebende Anordnung kann als eine körperlich vereinte Vorrichtung oder in separaten Einheiten aufgebaut sein. Die Sichtrichtungen der verschiedenen Sensoren sind in vorgegebenen Winkeln divergierend ausgerichtet. Für die meisten Anwendungen eignen sich spitze Winkel. Damit sind beide Sichtrichtungen ähnlich und ergeben eine gemeinsame Haupt-Sichtrichtung, die man etwa als die Winkelhalbierende annehmen kann. Drehungen um eine Achse in oder nahe der Winkelhalbierenden haben für die Abbilder der Bodenpunkte 61, 62 Bildverschiebungen in tangentialer Richtung zur Folge. Dem entsprechend sind die Sensoren 31, 32 so ausgerichtet, dass sie tangentiale Verschiebungen erkennen. Die in beiden Sensoren gemessenen Tangential-Verschiebungen können miteinander in Relation gesetzt werden, etwa durch Subtraktion, Mischung, Vergleich oder allgemein einer Überlagerung der Messwerte beider Sensoren. Auf diese Weise wird der tangentiale Abteil der Verschiebungen herausgefiltert, die Messung wird von anderen Bewegungen weitgehend unabhängig. Der Signalvergleich kann aus einer Mischung oder allgemein Überlagerung bestehen. Wenn die Einzel-Messwerte vor der Mischung verschieden gewichtet werden, so kann die Lage der Drehachse definiert verändert werden. Gleichzeitig kann eine andere Mischung der Messwerte einen anderen Messwert liefern, z.B. nach gemäß dem ersten Ausführungsbeispiel, wozu man eine Summe gleichgerichteter Bewegung verwenden kann. Statt Überlagerung kann allgemein jede bekannte Art des Signalvergleichs verwendet werden.

**Figur 3** zeigt ein drittes Ausführungsbeispiel der Erfindung. Es eignet sich zur Messung einer Entfernung oder Entfernungsänderung oder Annäherungs-Geschwindigkeit. Es wird die in Figur 2 beschriebene Anordnung verwendet, aber statt tangentialer Bild-Verschiebungen eine radiale Komponente der Bildverschiebung gemessen. Durch eine Subtraktion beider Sensorsignale oder allgemein eine Überlagerung beider Messwerte, wird der radial gegenläufige Anteil der Verschiebungen herausgefiltert. Bei Annäherung des Objektes bzw. Bodens 4 in die Position 4' wandert ein sichtbarer Punkt 41 in die Stellung 41 und sein Abbild auf dem Sensor 31 von Stellung (51) in radialer Richtung zu 51'. Gleiches gilt am Sensor 32 für die Punkte 42, 42' und Bilder 52, 52'. Aufgrund der Strahl-Geometrie wandert die gemessene Winkeldifferenz proportional zu einer Änderung der Distanz, und umgekehrt proportional zum Quadrat der absoluten Distanz. Bei ungefähr bekannter Distanz kann somit die Änderung gemessen werden, und, wenn man von einem Änderungs-Signal ausgeht, die Längs-Geschwindigkeit:

Im Unterschied zu einer Abstandsmessung, bei der bei einer gegebenen und zumindest ungefähr bekannten Translationsgeschwindigkeit eine gemessene optische Verschiebungsgeschwindigkeit als reziproker Messwert für den Abstand zwischen Vehikel und abgebildetem Teil der Szene herangezogen wird, wird hier nicht der Absolutwert des Abstandes, sondern die Änderungsrate gemessen. Auch ist es-hier nicht nötig, dass eine andere Geschwindigkeit in Querrichtung vorhanden und bekannt ist. Bei vertikaler Sichtrichtung ergibt sich die Messung einer Sink- bzw. Steigrate.

Wenn umgekehrt die Geschwindigkeit in etwa bekannt ist, kann mit der gleichen Anordnung anstelle der Geschwindigkeit auch die Absolut-Distanz, ermittelt werden: Da sich Messwert quadratisch zum reziproken Abstand verhält, ist die Genauigkeit des gemessenen Abstandes doppelt so gut ist die, mit der die Geschwindigkeit bekannt ist. Wenn z.B. die Geschwindigkeit nur auf ±10% genau bekannt ist, variiert der gemessene Abstand demzufolge nur um 5%.

Alle beschriebenen Mess-Verfahren für Abstände oder Annäherungsgeschwindigkeiten können verwendet werden zur Kollisionserkennung, etwa zum Antizipieren oder zum Vermeiden der Kollision.

Neben der Summe der Radialverschiebung kann auch die Differenz gebildet werden, also die Summe der gleichsinnigen Translation. Somit lassen sich gleichzeitig auch Quer-Bewegungen in den anderen beiden Achsen messen.

Die anhand Figuren 2 und 3 beschriebenen Messverfahren für Drehung und Annäherung können dadurch kombiniert werden, dass von jedem der mindestens zwei Verschiebungssensoren die Messwerte beider Koordinaten ausgewertet werden.

**Figur 4** zeigt ein viertes Ausführungsbeispiel. Drei Sensoren 31, 32, 33 sind mit ihren Sichtrichtungen in drei verschiedenen, zum Beispiel orthogonalen Richtungen angeordnet, wobei jeder Sensor 2 Mess-Richtungen haben kann. Es ergeben sich bis zu 6 Messwerte. Die Sicht-Richtungen können, müssen aber nicht orthogonal sein. Für eine Flug-Stabilisierung können alle drei Sichtrichtungen auf den Boden gerichtet sein wie die Füße eines Stativs. Die Messwerte der schrägen Sichtrichtungen können durch rechnerische Mischung gemäß einer Drehmatrix leicht in die zur Steuerung relevanten geraden Koordinaten umgewandelt werden. Mit solcher Anordnung lässt sich eine Orientierung in allen sechs Raumkoordinaten erreichen und die Flugbewegung in allen Komponenten erfassen und stabilisieren. Alle Messwerte können bereinigt werden um die durch Drehung verursachten beschriebenen Einflüsse, indem drei unabhängige Dreh-Sensoren vorgesehen sind. Die Drehachsen dieser Sensoren können einfachheitshalber in das gleiche Vektor-System ausgerichtet werden.

Diese unabhängigen Dreh-Sensoren lassen sich aber auch einsparen. Um jeweils einen der Sensoren 31, 32, 33 zu kompensieren, benützt man die Signale eines oder beider der übrigen Sensoren, wobei diese übrigen Sensoren zur Drehungs-Messung herangezogen werden, und benutzt deren Messwert als Drehsignal zur Kompensation des ersteren Sensors, wobei ein vom Verschiebungssensor abgeleiteter Messwert um die durch Drehbewegungen wie Rollen, Nicken und Gieren des Vehikels entstehenden Einflüsse zumindest teilweise bereinigt wird, indem ein Drehsignal, das zu einer Drehgröße, deren Winkel oder deren Winkelgeschwindigkeit proportional ist, mit dem optisch gewonnenen Messwert kompensierend gemischt wird.

Allgemein können beliebige der hier beschriebenen Messverfahren miteinander kombiniert werden: Ferner können hierdurch störende Einflüsse einer Bewegungskomponente auf die Messung einer anderen Bewegungskomponente dadurch eliminiert werden, dass mit einem anderen Sensor eine andere Mischung von Bewegungen gemessen wird und beide Signale einem Vergleich unterzogen werden. Bewegungsgrößen können in mehreren voneinander unabhängigen Freiheitsgraden gemessen werden, auch wenn diese Freiheitsgrade aus kombinierten Bewegungen bestehen, also nicht voneinander getrennt sind. Bewegungsachsen bzw. Koordinaten müssen nicht notwendigerweise orthogonal zueinander stehen. Da jeder Sensor eine andere Mischung an Bewegungskomponenten misst, kann eine Entmischung der Messwerte in getrennte Koordinaten vorgenommen werden, indem die Meßsignale durch geeignete Mischung nach den Gesetzen der Vektorgeometrie in linear unabhängige, wahlweise orthogonale Meßsignale ungeformt werden.

Allgemein können beliebig viele und verschieden ausgerichtete Sensoren verwendet werden. Zusätzlich können zur Auswertung die Signale derjenigen Sensoren ausgewählt werden, die einen ausreichenden Kontrast melden. Dadurch verringert sich die Wahrscheinlichkeit ungenügender Bilddetails.

Für eine Reglung muss die beschriebene Umformung nicht notwendigerweise erfolgen. Allgemein können Raumkomponenten einer Bewegung auch in gemischter Form gemessen und geregelt werden. Durch geeignete Sensor-Ausrichtung kann die gewünschte Mischung festgelegt werden. Beim Hubschrauber eine optische Drehmessung zur Steuerung des Heckrotors verwendet werden. Dabei kann der Sichtstrahl nach schräg hinten-unten ausgerichtet sein. Dann misst und regelt man eine Kombination aus Hochachsendrehung und seitlicher Abdrift. Auf diese Weise stellt sich der Rumpf Wind-unabhängig in die geflogene Richtung.

Es können auch andere, zur Stabilisierung schon übliche Fluginstrumente ersetzt werden. Beispielsweise kann bei ferngelenkten Modellen der übliche Hochachsen-Gyro durch die DrehMessung ersetzt werden. Ferner kann statt eines Variometers eine optische Steigraten-Messung verwendet werden. Dabei kann bei einer gegebenen und zumindest ungefähr bekannten Translationsgeschwindigkeit, eine gemessene optische Verschiebungsgeschwindigkeit als reziproker Messwert für den Abstand zwischen Vehikel und abgebildetem Teil der Szene herangezogen werden. Es können aber auch mindestens zwei Verschiebungssensoren 31, 32 verwendet und so ausgerichtet werden, dass ihre bei der optischen Abbildung resultierenden Haupt-Sichtrichtungen 11 a, 11 b in einem vorgegebenen Winkel divergieren und die Signale der Sensoren in Relation zueinander ausgewertet werden.

Weiterhin kann dabei zur Messung einer Drehbewegung um mindestens eine Drehachse 12 vorgesehen sein, dass die optischen Sensoren Verschiebungen der Bilder 63, 64 in gegenüber der Drehachse 12 tangentialer Richtung abtasten, und dass mittels Überlagerung von Messgrößen eine Messgröße für die Bewegungsanteile der durch Drehung 61-61', 62-62' resultierenden tangentialen Gegenbewegung gewonnen wird. Dabei kann insbesondere vorgesehen werden, dass die optischen Sensoren Verschiebungen 51', 52' der Bilder 51, 52 in radialer Richtung abtasten und dass durch Signalvergleich mittels Überlagerung der Messgrößen eine Messgröße für die Bewegungsanteile der bei Distanzänderung 41-41', 42-42' auftretenden radialen Gegenbewegung gewonnen wird.

Die dabei gewonnene Messgröße kann bei zumindest näherungsweise bekanntem Objektabstand als Messwert für die Änderung des Abstandes zu einem festen oder bewegten Objekt 4 herangezogen werden oder es kann bei zumindest näherungsweise bekannter Geschwindigkeits-Komponente längs einer mittleren Sichtrichtung 11 zwischen den mit den Sensoren erzeugten optischen Sichtrichtungen 11a, 11b die Messgröße als quadratisch reziproker Messwert des Abstandes zu einem Objekt 4 herangezogen werden.

Durch Kombination mit herkömmlichen Instrumenten zur Messung anderer Bewegungskomponenten, etwa der Flughöhe (Barometer) und der Nasen-Ausrichtung (Kompass), kann ein vollständiger Autopilot-realisiert werden, der die gesamte Steuerung übernimmt.

Bei GPS-gesteuerten Anwendungen kann die Genauigkeit, Auflösung und Schnelligkeit der Messung durch Ergänzung mit den optischen Messwerten erheblich verbessert werden, besonders für den bodennahen Bereich.

Bei ungenügender Beleuchtung oder Kontrasten aus der Umgebung kann das Sensorsignal fehlerhaft sein. Solche Fehler äußern sich meist in Form betragsmäßig zu kleiner oder ganz fehlender Verschiebungs-Werte, und treten meist lokal, d.h. an vereinzelten Stellen auf. Um die Anzahl verwertbarer Bildstellen zu erhöhen und um Aussetzer zu verringern, können mehrere Sensoren mit verschiedenen Sichtrichtungen vorgesehen werden, wie schon anhand Figur 2; 3 oder 4 erläutert, und die Sensorsignale in Relation zueinander ausgewertet werden. Hierbei kann ein gemeinsames Messwert-Ergebnis gebildet werden, bei dem Sensoren mit kleinerem Messwert nicht oder geringer gewichtet werden. Der Begriff "kleiner" kann sich den Betrag des Verschiebungs-Messwertes aus einer oder mehreren Koordinaten beziehen, und/oder auch auf eine vom Verschiebungssensor ausgegebenen Messgröße der aktuellen Helligkeit und /oder Kontrast-Qualität im betreffenden Sensor. Der gemeinsame Messwert kann beispielsweise gebildet werden mittels Maximalwertbildung, mittels gewichteter Durchschnittsbildung oder mittels einer Umschaltung zum jeweils stärksten Sensor.

Mit einer Vielzahl Verschiebungssensoren kann ein Array gebildet werden, und die Sensoren können miteinander matritziert vernetzt werden, wobei man das hier beschriebene gewichtete Ergebnis bilden kann. Weiterhin ist eine Kombination mit den anhand Figur 2, 3 und 4 beschriebenen Signal-Auswertungen möglich. Dies ermöglicht eine umfassende Auswertung der Bewegungen, welche bezüglich Geschwindigkeit einem auf Auswertung eines Videosignals basierenden Verfahren weit überlegen ist.

Zur Vermeidung von Steuerfehlern, die eine Meßstörung zur Folge haben könnte, kann, unabhängig oder in Kombination zu obigen Methoden, beim Entfallen des Meßsignals die Regelung in einen anderen Modus umgeschaltet werden, bei dem kein optischen Meßsignal gebraucht wird. Die Umschaltung kann gesteuert werden vom Ausbleiben des Meßsignals und/oder von der Unterschreitung eines Mindest-Kontrastwertes und / oder einer Mindest-Helligkeit. Die Umschaltung der Regelung kann erfolgen, indem die Wichtungs-Anteile für die bei der Mischung und Regelung beteiligten Soll- und Messwert- Größen geeignet umgestellt werden, z.B. auf eine Konfiguration, wie sie aus dem Stand der Technik ohne Verschiebungssensor bekannt ist, bis das optische Signal wieder ausreichend vorhanden ist. In einem einfachen Spezialfall hiervon kann während fehlendem Meßsignal die Rotomeigung horizontal gehalten werden.

Eine Vorrichtung der beschriebenen Art kann allgemein auch zum Erkennen oder Messen von Relativ-Bewegungen zwischen der Vorrichtung und einem davon entfernten Objekte jeder Art (unter Messung der Winkeländerung der optischen Einfallsrichtung eines virtuellen Bildes) verwendet werden; hierbei kann einerseits der optisch abgetastete Körper bewegt sein und / oder andererseits, wie im beschriebenen Fall des Flugkörpers, ein die Sensorvorrichtung tragender Körper. Hierzu muss lediglich ein optoelektronischer Verschiebungssensor 3, der mit einer Vielzahl photosensibler Teilflächen (Pixel) ausgestattet ist und Verschiebungen optischer Strukturen erkennt und ein Meßsignal für die Verschiebung ausgibt und eine Auswerteinheit hierfür auf seinem Chip integriert enthält, mit einer Abbildungsoptik 1 kombiniert und so angeordnet werden, dass optische Strukturen von unendlich entfernten Objekten auf der lichtempfindlichen Fläche des Sensors abgebildet werden mit einer Auflösung, die zur Erkennung einer Bildverschiebung ausreicht.

Als Beleuchtung kann das Umgebungslicht dienen. Die zur Verschiebungs-Abtastung erforderlichen Kontraste können durch die Oberfläche des abgebildeten Objektes entstehen, oder auch durch die Konturen eines oder mehrerer Objekte gegenüber einem Hintergrund.

Im Unterschied zur Funktion einer optischen Maus kann das Objekt kleiner sein als der optische Erfassungsbereich der Vorrichtung, wobei dieses Bereich durch die Größe der lichtempfindlichen Sensorfläche, die Brennweite und den Abtast-Absfand bestimmt ist. Das Objekt kann mit dem zur Abtastung erforderlichen Licht auch durchstrahlt werden.

Hier eine Aufstellung der dadurch möglicher Anwendungen, bei Bewegungen des abgetasteten Objektes: Eine Anwendung ist die Erkennung der Anwesenheit bewegter Objekte, etwa zur automatischen Öffnung von Toren bei einfahrende Fahrzeugen oder eintretenden Personen, wobei im Unterschied zu bekannten optischen Sensoren wie Lichtschranken oder Lichttaster keine Einschränkung der Reichweite gegeben ist. Bei unstrukturiertem Hintergrund kann das erkannte Objekt wesentlich kleiner sein als der optische Erkennungsbereich, der durch die Größe der lichtempfindlichen Sensorfläche festgelegt wird.

Eine weitere Anwendung ist die kontaktlose Messung von Geschwindigkeiten oder Drehungen bewegter Körper oder zur Messung des Abstandes zu bewegten Körpern. Beispielsweise kann der Sensor auf das auf einem Förderband befindliche Fördergut gerichtet sein. Bei gegebener Fördergeschwindigkeit kann aus der optisch gemessenen Verschiebungsgeschwindigkeit ein Messwert für die Höhe des Fördergutes ableiten, indem dessen Kehrwert gebildet wird.

Ferner können fortlaufende Materialien auf Fehlerfreiheit untersucht werden. Ein Fehler kann je nach Oberflächenbeschaffenheit und Beleuchtung als erkannte Struktur oder auch als ausbleibende Struktur registriert werden. Gegenüber herkömmlichen Bildsystemen ist erhebliche Kosten-Einsparung möglich.

Ferner kann die Geschwindigkeit von Flüssigkeiten oder Gasen anhand der mitbewegten Schwebepartikel gemessen werden.

Eine weitere Anwendung ist es, eine visuelle Darstellung, beispielsweise in einem Schaufenster, von der Bewegung eines Betrachters abhängig zu machen. Hierzu wird der Betrachter mit der Vorrichtung optisch abgetastet. Indem das Gesicht eines Betrachters abgetastet wird, lässt sich das bei 3D-Bilddarbietungen auftretende Problem der Nachführung (Headtracking) auf preiswerte Art lösen. Das Meßsignal des Verschiebungssensors kann als Maß der Verschiebung des Kopfes und/oder der aktuellen Augenposition herangezogen werden. Dieses Signal kann sowohl die Ansichtsperspektive eines dem Betrachter dargebotenen Bildes steuern, sodass sie der Kopfbewegung des Betrachters entspricht, als auch die Austrittsrichtung der für separate Augen vorgesehenen Austrittspupillen bei einer stereo-optischen Bilddarstellung, um auch bei Kopfbewegungen ein Eintreffen in die richtig zugeordneten Augen zu ermöglichen.

Zusätzlich zu den Verschiebungssignalen des Sensors können auch weitere aus dem Sensor gewonnenen Meßsignale, etwa ein Helligkeits-Wert oder ein Kontrast-Qualitäts-Wert ausgewertet werden. Dies ist vorteilhaft zur Erkennung von Fördergut und Steuerung von Maschinen.

Anwendungen bei bewegter Sensorvorrichtung: Für Roboter und Fahrzeuge, auch selbstlenkenden, und zwar sowohl zur automatischen Lenkung über einen Regelkreis, als auch zur Abstandserkennung und Kollisionsvermeidung. Auch in diesem Fall kann die Bewegung wahlweise quantitativ gemessen werden oder nur die Anwesenheit eines Objektes, etwa eines Hindernisses erkannt werden. Bei seitlicher Sichtrichtung kann der Seitenabstand, etwa zu einer Wand, gemessen und geregelt werden. Als Stellglied kann hierbei die Lenkung gesteuert werden und ermöglicht das Fahren entlang eines Hindernisses.

## Patentansprüche

1. Vorrichtung zur Messung der Bewegung und/oder Position eines maschinell steuerbaren oder mit Eigenantrieb versehenen Vehikels (1) in mindestens einem seiner sechs räumlichen Freiheitsgrade unter Verwendung optischer Sensorik, wobei die Sensorik eine am Vehikel (1) vorgesehene Abbildungsoptik (2) umfasst, mit der ein Bild einer Umgebung (4) ausschnittsweise in eine Bildebene abgebildet werden kann, sowie einen optoelektronischen Verschiebungssensor (3) aufweist, wobei die Abbildungsoptik (2) in der Weise gestaltet und angeordnet ist, dass sie unendlich entfernte Bildstrukturen auf dem Verschiebungssensor (3) abbilden kann, **dadurch gekennzeichnet, dass**
- der optoelektronische Verschiebungssensor (3) zumindest einen für optische Mäuse bestimmten oder mit einen solchen strukturgleichen Chip umfasst, wobei
- der Chip einerseits eine Abtastfläche mit einer Vielzahl photosensibler Teilflächen und andererseits eine digitale Auswerteelektronik aufweist, die Signale von den photosensiblen Teilflächen mit einer Ausleserate ausliest, diese Signale zur Erkennung von Bildverschiebungen abgebildeter Strukturen auswertet und zur Ausgabe eines Meßsignals für eine Bildverschiebung ausgebildet ist.

2. Vorrichtung nach Anspruch 1, **dadurch gekennzeichnet, dass** sie derart ausgebildet ist, dass zur Ermittlung der Verschiebungsgröße die Daten der photosensiblen Teilflächen fortlaufend wiederholt ausgelesen werden und mit denen von einem früheren Zeitpunkt aus der selben Sequenz korreliert und dabei koordinatenmäßig miteinander verglichen werden.

3. Vorrichtung nach einem der vorhergehenden Ansprüche, **dadurch gekennzeichnet, dass** sie derart ausgebildet ist, dass der Auswertprozess für die Daten der photosensiblen Teilflächen digital programmgesteuert erfolgt, und der Vergleich mit den jeweils zuletzt ausgelesen Daten der photosensiblen Teilflächen oder mit Daten aus einem früheren Zyklus der selben Sequenz erfolgt.

4. Vorrichtung nach einem der vorausgehenden Ansprüche, **gekennzeichnet durch** eine elektronische Vorrichtung (7), die derart ausgebildet ist, dass sie eine Frequenz der vom Verschiebungssensor (3) ausgegebenen Verschiebungswerte oder Verschiebungssprünge misst und dabei die Richtung der Verschiebung als Vorzeichen einbezieht.

5. Vorrichtung nach einem der vorausgehenden Ansprüche, **dadurch gekennzeichnet, dass** sie mindestens ein Gyroskop (9) enthält sowie eine Schaltung, die geeignet ist zum kompensierenden Mischen von aus Gyroskop und Verschiebungssensor abgeleiteten Signalen.

6. Vorrichtung nach einem der vorausgehenden Ansprüche, **dadurch gekennzeichnet, dass** mindestens zwei Verschiebungssensoren (31, 32) vorgesehen und so ausgerichtet sind, dass ihre bei der optischen Abbildung resultierenden Haupt-Sichtrichtungen (11 a, 11 b) in einem vorgegebenen Winkel divergieren und dass eine elektronische Auswertschaltung vorgesehen und an die Ausgänge beider Verschiebungssensoren (31, 32) gekoppelt ist, welche geeignet ist zur Auswertung der Signale der Verschiebungssensoren (31, 32) in Relation zueinander.

7. Vorrichtung zur Steuerung oder Stabilisierung der Bewegung und/oder Position eines maschinell steuerbaren oder mit Eigenantrieb versehenen Vehikels, in mindestens einem seiner sechs räumlichen Freiheitsgrade, mit einer Messvorrichtung nach einem der vorausgehenden Ansprüche **gekennzeichnet durch** eine elektronische Regelvorrichtung (7), die eingerichtet ist zum Bilden eines Stellwertes aus einem vom Meßsignal des Verschiebungssensors (3) abgeleiteten Istwert, und zum Anschluss an Stellglieder (8), die das Vehikel (1) steuern.

8. Vorrichtung mit einer Messvorrichtung nach einem der vorausgehenden Ansprüche zur Flugstabilisierung eines Flugkörpers, **gekennzeichnet durch** eine elektronische Vorrichtung (7) zum Bilden eines Stellwertes aus einem vom Meßsignal des optoelektronischen Verschiebungssensors (3) abgeleiteten istwert, welche eingerichtet ist zum Anschluss an Stellglieder, die den Flugkörper steuern.

9. Vorrichtung nach einem der vorhergehenden Ansprüche, **dadurch gekennzeichnet, dass** das Vehikel (1) ein Flugkörper ist.

10. Vorrichtung nach einem der vorhergehenden Ansprüche, **dadurch gekennzeichnet, dass** die Abbildungsoptik (2) auf einen solchen Abstand eingerichtet ist, dass sich zuzüglich der Schärfentiefe, ein Schärfebereich von Unendlich bis zu einem kürzestmöglichen Objektabstand ergibt.

11. Verfahren zur Messung der Bewegung und/oder Position eines maschinell steuerbaren oder mit Eigenantrieb versehenen Vehikels (1) in mindestens einem der sechs räumlichen Freiheitsgrade unter Verwendung optischer Sensorik, wobei mithilfe einer vom Vehikel (1) getragenen Abbildungsoptik (2) ein von der aktuellen Position des Vehikels (1) aus sichtbares Ausschnittsbild der Umgebung (4) erfasst wird, wobei das Ausschnittsbild auf die photoempfindliche Fläche eines optoelektronischen Verschiebungssensors (3) in der Weise abgebildet wird, dass unendlich entfernte Bildstrukturen zur Verschiebungserkennung ausreichend aufgelöst sind,
**dadurch gekennzeichnet,**
- **dass** als optoelektronischer Verschiebungssensor (3) zumindest der Chip eines für optische Mäuse bestimmten Sensors oder ein mit einem solchen strukturgleicher Chip verwendet wird, wobei
- der Chip einerseits eine Abtastfläche mit einer Vielzahl photoempfindlicher Teilflächen aufweist und andererseits eine digitale Auswerteelektronik aufweist, die so ausgebildet ist, dass sie die Signale von den photoempfindlichen Teilflächen mit einer Ausleserate ausliest, diese zur Erkennung von Bildverschiebungen abgebildeter Strukturen auswertet und ein Meßsignal für eine Bildverschiebung ausgibt.

12. Verfahren nach Anspruch 11, **dadurch gekennzeichnet, dass** der Verschiebungswert durch fortlaufenden Vergleich mit vorherigen Messdaten gebildet wird, dass die integrierte Auswertelektronik ausgenutzt wird, um von den Bildstrukturen der Umgebung einen optischen Verschiebungswert zu bilden und dass der Verschiebungswert als Maß für mindestens eine Orts- und/oder Bewegungsgröße des Vehikels herangezogen wird.

13. Verfahren nach Anspruch 11 oder 12, **dadurch gekennzeichnet, dass** ein vom Verschiebungssensor (3) ausgegebener Messwert nach der Zeit differenziert wird.

14. Verfahren nach Anspruch 11 oder 12, **dadurch gekennzeichnet, dass** aus einem vom Verschiebungssensor (3) ausgegebenen Messwert eine Signalvariable abgeleitet wird und zumindest in einem Teil ihres Frequenzbereiches nach der Zeit differenziert wird.

15. Verfahren nach einem der Ansprüche 11 bis 14, **dadurch gekennzeichnet, dass** aus den Signalen mindestens zweier Verschiebungssensoren (31, 32) ein gemeinsamer Ergebnis-Wert gebildet wird, wobei Messwerte aus einem Sensor nicht oder schwächer gewichtet werden, wenn dessen aktueller Messwert der Verschiebung und/oder der Helligkeit und/oder der Kontrastqualität betragsmäßig kleiner ist.

16. Verfahren nach einem der Ansprüche 11 bis 15, **dadurch gekennzeichnet, dass** das Vehikel (1) ein Flugkörper ist und dass bei zumindest ungefähr bekannter Fluggeschwindigkeit eine optoelektronisch gewonnene Messgröße als reziproker Messwert für die Flughöhe über Grund herangezogen wird.

17. Verfahren zur Stabilisierung eines Flugkörpers mittels Istwert-Sollwert- Vergleich und Steuerung basierend auf einem Verfahren nach einem der Ansprüche 11 bis 16, **dadurch gekennzeichnet, dass** in mindestens einer Neigungs-Achse die optische Sichtrichtung der Abbildung mit einer wesentlichen vertikalen Komponente nach unten ausgerichtet ist, und dass das optische Meßsignal als Messwert für mindestens eine der horizontalen Bewegungsgrößen Position, Weg, Geschwindigkeit und Beschleunigung herangezogen wird und dass die Neigung des Flugkörpers in Abhängigkeit davon gesteuert wird.

18. Verfahren nach einem der Ansprüche 11 bis 17, **dadurch gekennzeichnet, dass** der Neigungswinkel ebenfalls einer Regelung unterliegt und dass zur Darstellung des Neigungs-Istwertes eine aus dem optischen Sensor hergeleitete Messgröße einer Horizontalgeschwindigkeit in zumindest einem Abschnitt ihres Frequenzbereiches zeitlich differenziert wird.

19. Verfahren nach einem der Ansprüche 11 bis 18 **dadurch gekennzeichnet, dass** es zur Zielverfolgung eines festen oder bewegten Zieles verwendet wird und dass die optische Sichtrichtung des Verschiebungssensors (3) auf das Ziel gerichtet ist und ein Meßsignal von mindestens einer oder beiden Achsen der Verschiebung herangezogen wird zur gegenkoppelnden Lenkung der optischen Sichtrichtung in einer oder zwei Achsen.

20. Verfahren nach Anspruch 19, **dadurch gekennzeichnet, dass** es zur Stabilisierung und Ausrichtung einer Foto- oder Filmkamera auf ein Ziel verwendet wird.

21. Verfahren nach einem der Ansprüche 11 bis 20, **dadurch gekennzeichnet, dass** zur Ermittlung der Verschiebungsgröße die Daten der photosensiblen Teilflächen fortlaufend wiederholt ausgelesen werden und mit denen von einem früheren Zeitpunkt aus der selben Sequenz korreliert und dabei koordinatenmäßig miteinander verglichen werden.

## Claims

1. Apparatus for measurement of the movement and/or position of a machine-controllable vehicle (1) or a vehicle (1) which is provided with its own propulsion system, in at least one of its six spatial degrees of freedom using an optical sensor system, with the sensor system comprising imaging optics (2) which are provided on the vehicle (1) and by means of which an image of a surrounding area (4) can be imaged, in the form of a detail or details, on an imaging plane, as well as an optoelectronic movement sensor (3), with the imaging optics (2) being designed and arranged in such a manner that they can image image structures at infinity on the movement sensor (3), **characterized in that**
- the optoelectronic movement sensor (3) comprises at least one chip which is intended for optical mice or is structurally identical to such, with
- the chip on the one hand having a scanning area with a multiplicity of photosensitive area elements and on the other hand having digital evaluation electronics which read signals from the photosensitive area elements at a reading rate, evaluate these signals in order to identify image movements of imaged structures, and are designed to output a measurement signal for image movement.

2. Apparatus according to Claim 1, **characterized in that** the apparatus is designed such that the movement variable is determined by repeatedly and continuously reading the data from the photosensitive area elements and correlating them with those from an earlier time from the same sequence, with the coordinates being compared with one another during this process.

3. Apparatus according to one of the preceding claims, **characterized in that** the apparatus is designed such that the evaluation process for the data from the photosensitive area elements is carried out digitally under program control, and the comparison process is carried out using the respectively most recently read data from the photosensitive area elements or using data from a previous cycle in the same sequence.

4. Apparatus according to one of the preceding claims, **characterized in that** an electronic apparatus (7) which is designed such that it measures a frequency of the movement values or movement sudden changes output from the movement sensor (3), and in this case includes the direction of the movement as a mathematical sign.

5. Apparatus according to one of the preceding claims, **characterized in that** the apparatus contains at least one gyroscope (9) as well as a circuit which is suitable for compensating mixing of signals derived from the gyroscope and the movement sensor.

6. Apparatus according to one of the preceding claims, **characterized in that** at least two movement sensors (31, 32) are provided and they are aligned such that their main viewing directions (11a, 11b), which result from the optical imaging, diverge at a predetermined angle, and such that an electronic evaluation circuit is provided and is coupled to the outputs of the two movement sensors (31, 32), which electronic evaluation circuit is suitable for evaluation of the signals from the movement sensors (31, 32) with respect to one another.

7. Apparatus for controlling or stabilizing the movement and/or position of a machine-controllable vehicle or a vehicle which is provided with its own propulsion system, in at least one of its six spatial degrees of freedom, having a measurement apparatus according to one of the preceding claims, **characterized by** an electronic control apparatus (7) which is designed to form a set value from an actual value derived from the measurement signal from the movement sensor (3) and for connection to actuating elements (8) which control the vehicle (1).

8. Apparatus having a measurement apparatus according to one of the preceding claims for flight stabilization of an airborne vehicle, **characterized by** an electronic apparatus (7) for forming a set value from an actual value derived from the measurement signal of the optoelectronic movement sensor (3), which is designed for connection to actuating elements which control the airborne vehicle.

9. Apparatus according to one of the preceding claims, **characterized in that** the vehicle (1) is an airborne vehicle.

10. Apparatus according to one of the preceding claims, **characterized in that** the imaging optics (2) are set up for a distance such that they result in a focal range from infinity to a shortest-possible object distance, plus the depth of focus.

11. Method for measurement of the movement and/or position of a machine-controllable vehicle (1) or a vehicle (1) which is provided with its own propulsion system in at least one of the six spatial degrees of freedom using an optical sensor system, wherein a detailed image of the surrounding area (4), which can be seen from the current position of the vehicle (1), is recorded with the aid of imaging optics (2) which are carried by the vehicle (1), with the detailed image being mapped onto the photosensitive area of an optoelectronic movement sensor (3) in such a way that image structures at infinity are adequately resolved for movement identification,
**characterized**
- **in that** at least the chip of a sensor which is intended for optical mice or a chip which is structurally identical to such a chip is used as the optoelectronic movement sensor (3), with
- the chip on the one hand having a scanning area with a multiplicity of photosensitive area elements and on the other hand having digital evaluation electronics which read signals from the photosensitive area elements at a reading rate, evaluate these signals in order to identify image movements of imaged structures, and are designed to output a measurement signal for image movement.

12. Method according to Claim 11, **characterized in that** the movement value is formed by continuous comparison with previous measured data, **in that** the integrated evaluation electronics are used in order to form an optical movement value from the image structures of the surrounding area, and **in that** the movement value is used as a measure of at least one position and/or movement variable of the vehicle.

13. Method according to Claim 11 or 12, **characterized in that** a measured value which is emitted from the movement sensor (3) is differentiated with respect to time.

14. Method according to Claim 11 or 12, **characterized in that** a signal variable is derived from a measured value emitted from the movement sensor (3), and is differentiated with respect to time over at least a part of its frequency range.

15. Method according to one of Claims 11 to 14, **characterized in that** a common result value is formed from the signals from at least two movement sensors (31, 32), with measured values from one sensor not being weighted or being weighted more lightly when its current measured value of the movement and/or of the brightness and/or of the contrast quality has a smaller magnitude.

16. Method according to one of Claims 11 to 15, **characterized in that** the vehicle (1) is an airborne vehicle and **in that**, if the airspeed is known at least approximately, an optoelectronically obtained measurement variable is used as the reciprocal of the measured value of the altitude above ground.

17. Method for stabilization of an airborne vehicle by means of actual value/nominal value comparison and control based on a method according to one of Claims 11 to 16, **characterized in that** the optical direction of sight of the image is aligned on at least one inclination axis with an essentially vertical component downwards, and **in that** the optical measurement signal is used as a measured value for at least one of the horizontal movement variables position, distance, velocity and acceleration, and **in that** the inclination of the airborne vehicle is controlled as a function of this.

18. Method according to one of Claims 11 to 17, **characterized in that** the inclination angle is likewise subject to closed-loop control and **in that** a measurement variable, which is derived from the optical sensor, of a horizontal velocity is differentiated with respect to time over at least one section of its frequency range in order to represent the actual inclination value.

19. Method according to one of Claims 11 to 18, **characterized in that** the method is used for target tracking of a fixed or moving target, and **in that** the optical direction of sight of the movement sensor (3) is aimed at the target, and a measurement signal from at least one or both axes of the movement is used for steering the optical direction of sight, with negative feedback, on one or two axes.

20. Method according to Claim 19, **characterized in that** the method is used for stabilization and alignment of a photographic camera or film camera with a target.

21. Method according to one of Claims 11 to 20, **characterized in that** the movement variable is determined by repeatedly and continuously reading the data from the photosensitive area elements and correlating them with those from an earlier time from the same sequence, with the coordinates being compared with one another during this process.

## Revendications

1. Dispositif pour mesurer le mouvement et/ou la position d'un véhicule (1) à commande mécanisée ou muni de son propre mécanisme propulseur dans au moins l'un de ses six degrés de liberté dans l'espace en utilisant un dispositif de détection optique, le dispositif de détection comprenant une optique de représentation (2) prévue sur le véhicule (1) et permettant de représenter par sections une image d'un environnement (4) dans un plan d'image, et présentant un détecteur de déplacement (3) optoélectronique, l'optique de représentation (2) étant configurée et disposée de telle sorte qu'elle peut représenter sur le détecteur de déplacement (3) des structures d'image se trouvant à une distance infinie, **caractérisé en ce que** le détecteur de déplacement (3) optoélectronique comprend au moins une puce destinée à une souris optique ou ayant une structure similaire à celle-ci, la puce présentant d'un côté une surface de palpage munie d'une pluralité de surfaces partielles photosensibles et de l'autre côté une électronique d'interprétation numérique qui lit les signaux des surfaces partielles photosensibles à une fréquence de lecture, interprète ces signaux pour détecter des déplacements d'image des structures représentées et qui est configurée pour délivrer un signal de mesure pour un déplacement d'image.

2. Dispositif selon la revendication 1, **caractérisé en ce qu'**il est configuré de telle sorte que pour déterminer la grandeur de déplacement, les données des surfaces partielles photosensibles sont lues continuellement de manière répétitive puis corrélées avec celles d'un moment antérieur de la même séquence et comparées alors entre elles au niveau de leurs coordonnées.

3. Dispositif selon l'une des revendications précédentes, **caractérisé en ce qu'**il est configuré de telle sorte que le processus d'interprétation des données des surfaces partielles photosensibles est un processus numérique commandé par programme et la comparaison est effectuée avec les dernières données respectives lues des surfaces partielles photosensibles ou avec des données d'un cycle antérieur de la même séquence.

4. Dispositif selon l'une des revendications précédentes, **caractérisé par** un dispositif électronique (7) qui est configuré de telle sorte qu'il mesure une fréquence des valeurs de déplacement ou des sauts de déplacement délivrés par le détecteur de déplacement (3) et inclut ici le sens du déplacement sous la forme d'un signe.

5. Dispositif selon l'une des revendications précédentes, **caractérisé en ce qu'**il contient au moins un gyroscope (9) ainsi qu'un circuit qui est conçu pour un mélange compensé des signaux dérivés du gyroscope et du détecteur de déplacement.

6. Dispositif selon l'une des revendications précédentes, **caractérisé en ce qu'**au moins deux détecteurs de déplacement (31, 32) sont prévus et orientés de telle sorte que leurs sens de vision principaux (11a, 11b) obtenus lors de la représentation optique divergent selon un angle prédéfini et qu'il est prévu un circuit d'interprétation électronique qui est connecté aux sorties des deux détecteurs de déplacement (31, 32) et qui est conçu pour interpréter les signaux des détecteurs de déplacement (31, 32) en relation entre eux.

7. Dispositif de commande ou de stabilisation du mouvement et/ou de la position d'un véhicule à commande mécanisée ou muni de son propre mécanisme propulseur dans au moins l'un de ses six degrés de liberté dans l'espace, comprenant un dispositif de mesure selon l'une des revendications précédentes, **caractérisé par** un dispositif de régulation (7) électronique qui est configuré pour former une valeur de commande à partir d'une valeur réelle dérivée du signal de mesure du détecteur de déplacement (3) et pour être raccordé à des éléments de commande (8) qui commandent le véhicule (1) .

8. Dispositif comprenant un dispositif de mesure selon l'une des revendications précédentes pour la stabilisation du vol d'un engin volant, **caractérisé par** un dispositif électronique (7) destiné à former une valeur de commande à partir d'une valeur réelle dérivée du signal de mesure du détecteur de déplacement (3) optoélectronique, lequel est conçu pour être raccordé à des éléments de commande qui commandent l'engin volant.

9. Dispositif selon l'une des revendications précédentes, **caractérisé en ce que** le véhicule (1) est un engin volant.

10. Dispositif selon l'une des revendications précédentes, **caractérisé en ce que** l'optique de représentation (2) est réglée à un écart donné de manière à obtenir, du point de vue de la profondeur de champ, une plage de netteté entre l'infini et un écart le plus petit possible par rapport à l'objet.

11. Procédé pour mesurer le mouvement et/ou la position d'un véhicule (1) à commande mécanisée ou muni de son propre mécanisme propulseur dans au moins l'un de ses six degrés de liberté dans l'espace en utilisant un dispositif de détection optique, une image partielle de l'environnement (4) visible depuis la position actuelle du véhicule (1) étant acquise à l'aide d'une optique de représentation (2) transportée par le véhicule (1), l'image partielle étant représentée sur la surface photosensible d'un détecteur de déplacement (3) optoélectronique de manière à obtenir une résolution suffisante des structures d'image se trouvant à une distance infinie en vue de la détection du déplacement, **caractérisé en ce que** le détecteur de déplacement (3) optoélectronique utilisé est au moins la puce d'un détecteur destiné à une souris optique ou une puce ayant une structure similaire à celle-ci, la puce présentant d'un côté une surface de palpage munie d'une pluralité de surfaces partielles photosensibles et de l'autre côté une électronique d'interprétation numérique qui est configurée pour lire les signaux des surfaces partielles photosensibles à une fréquence de lecture, interprète ceux-ci pour détecter des déplacements d'image des structures représentées et délivre un signal de mesure pour un déplacement d'image.

12. Procédé selon la revendication 11, **caractérisé en ce que** la valeur du déplacement est formée par une comparaison continue avec les données de mesure précédentes, que l'électronique d'interprétation intégrée est utilisée pour former une valeur de déplacement optique des structures d'image de l'environnement et que la valeur de déplacement est utilisée comme indication pour au moins une grandeur de localisation et/ou de mouvement du véhicule.

13. Procédé selon la revendication 11 ou 12, **caractérisé en ce qu'**une valeur mesurée délivrée par le détecteur de déplacement (3) est différenciée en fonction du temps.

14. Procédé selon la revendication 11 ou 12, **caractérisé en ce qu'**une variable de signal est dérivée à partir d'une valeur mesurée délivrée par le détecteur de déplacement (3) et elle est soumise à une différenciation en fonction du temps au moins dans une partie de sa plage de fréquences.

15. Procédé selon l'une des revendications 11 à 14, **caractérisé en ce qu'**une valeur de résultat commune est formée à partir des signaux d'au moins deux détecteurs de déplacement (31, 32), les valeurs mesurées d'un détecteur n'étant pas pondérées, ou pondérées plus faiblement, lorsque sa valeur mesurée actuelle du déplacement et/ou de la luminosité et/ou de la qualité du contraste est inférieure.

16. Procédé selon l'une des revendications 11 à 15, **caractérisé en ce que** le véhicule (1) est un engin volant et qu'à une vitesse de vol connue au moins approximativement, une grandeur mesurée obtenue par voie optoélectronique est utilisée comme valeur mesurée réciproque pour l'altitude de vol au-dessus du sol.

17. Procédé de stabilisation d'un engin volant au moyen d'une comparaison valeur réelle/valeur de consigne et de commande en se basant sur un procédé selon l'une des revendications 11 à 16, **caractérisé en ce que** dans au moins un axe d'inclinaison, le sens de vision optique de la représentation est dirigé vers le bas avec une composante essentiellement verticale et que le signal de mesure optique est utilisé comme valeur mesurée pour au moins l'une des grandeurs de mouvement horizontal que sont la position, le trajet, la vitesse et l'accélération et que l'inclinaison de l'engin volant est commandée en fonction de celle-ci.

18. Procédé selon l'une.des revendications 11 à 17, **caractérisé en ce que** l'angle d'inclinaison est également soumis à une régulation et que pour représenter la valeur réelle de l'inclinaison, une grandeur mesurée d'une vitesse horizontale dérivée du détecteur optique est soumise à une différenciation dans le temps dans au moins une partie de sa plage de fréquences.

19. Procédé selon l'une des revendications 11 à 18, **caractérisé en ce qu'**il est utilisé pour la poursuite d'une cible fixe ou mobile et que le sens de vision optique du détecteur de déplacement (3) est dirigé sur la cible et un signal de mesure d'au moins un ou des deux axes de déplacement est utilisé pour la direction par contre-réaction du sens de vision optique dans un ou deux axes.

20. Procédé selon la revendication 19, **caractérisé en ce qu'**il est utilisé pour stabiliser et orienter un appareil photographique ou une caméra sur une cible.

21. Procédé selon l'une des revendications 11 à 20, **caractérisé en ce que** pour déterminer la grandeur de déplacement, les données des surfaces partielles photosensibles sont lues continuellement de manière répétitive puis corrélées avec celles d'un moment antérieur de la même séquence et comparées alors entre elles au niveau de leurs coordonnées.
